# EUROPÄISCHE PATENTSCHRIFT

(11) **EP 3 583 037 B1**
(45) Veröffentlichungstag und Bekanntmachung des Hinweises auf die Patenterteilung: **15.10.2025**
(21) Anmeldenummer: 18703585.2
(22) Anmeldetag: 06.02.2018
(51) Int. Cl.: B65B 43/42, B65B 43/54, B65G 23/23, B65B 3/02, B65B 3/04, B65B 7/18, B65G 54/02

(54) **VERPACKUNGSMASCHINE SOWIE VERFAHREN ZUM BETREIBEN EINER VERPACKUNGSMASCHINE**
PACKAGING MACHINE AND METHOD FOR OPERATING A PACKAGING MACHINE
MACHINE À EMBALLER ET PROCÉDÉ D'OPÉRATION D'UNE MACHINE À EMBALLER

(30) Priorität: 14.02.2017 DE 102017102914
(43) Veröffentlichungstag der Anmeldung: 25.12.2019
(73) Patentinhaber: SIG Services AG, 8212 Neuhausen am Rheinfall (CH)
(72) Erfinder: VON BIRGELEN, Bernd, 52525 Waldfeucht (DE); LÜNNEMANN, Bernd, 40489 Düsseldorf (DE); KLAUS, Markus, 52249 Eschweiler (DE); NABER, Klaus, 47906 Kempen (DE); OTT, Frank, Neuss 41464 (DE); REINERS, Stefan, 52525 Heinsberg (DE); SCHAAF, Michael, 52134 Herzogenrath (DE); SCHOPEN, Marcel, Leverkusen 51381 (DE); STOLL, Michael, Hückelhoven 41836 (DE); ZAGAR, Franco, 47929 Grefrath (DE); MBAREK, Taoufik, 52146 Würselen (DE)
(74) Vertreter: Cohausz & Florack
(86) Internationale Anmeldenummer: PCT/EP2018/052913
(87) Internationale Veröffentlichungsnummer: WO 2018/149692

(56) Entgegenhaltungen:
- DE-A1- 102012 223 173
- DE-A1- 102012 223 173
- US-B1- 6 876 896
- US-B1- 6 876 896
- BECKHOFF AUTOMATION: "Beckhoff Automation", YOUTUBE, 21 January 2016 (2016-01-21), pages 1 pp., XP054978309, Retrieved from the Internet <URL:https://www.youtube.com/watch?v=U_E7UV7zCjc> [retrieved on 20180504]
- BECKHOFF AUTOMATION: "Beckhoff XTS application example: Bottling plant", YOUTUBE, 21 January 2013 (2013-01-21), pages 1 pp., XP054978310, Retrieved from the Internet <URL:https://www.youtube.com/watch?v=_HiA1l1v3-U> [retrieved on 20180504]

## Beschreibung

Der Gegenstand betrifft eine Verpackungsmaschine sowie Verfahren zum Betreiben einer Verpackungsmaschine.

Insbesondere betrifft der Gegenstand eine Vorrichtung als auch ein Verfahren zum Befüllen von Getränkebehältern, insbesondere Verbundverpackungen. In einem Produktivbereich (auch als Prozesseinheit bezeichnet) einer Verpackungsmaschine werden die Verpackungen verarbeitet und insbesondere an einer Füllstation, an die die Verpackungen zugeführt werden befüllt. Anschließend werden die befüllten, noch offenen Verpackungen von der Füllstation abgeführt und zu fertigen Verpackungen verschlossen.

Solche Verfahren und auch die dazu verwendeten Vorrichtungen, oft auch als Füllmaschinen bezeichnet, sind in der Praxis in vielerlei Ausführungen seit langem bekannt. Bekannte Verpackungsmaschinen arbeiten taktweise, wobei die Verpackungen getaktet in einem Arbeitstakt einen bestimmten Vorschub erfahren und eine bestimmte Verweilzeit an der Verarbeitungsstation verweilen. Der taktweise Transport der insbesondere auf Transportketten von aufrecht stehenden und oben offenen Verpackungen hat, um einen großen Durchsatz zu erreichen, nur relativ kurze Verweilzeiten. Das bedeutet, dass das abzufüllende Produkt in relativ kurzer Zeit, nämlich in der Verweilzeit, in die Verpackungen gebracht werden muss. Dies führt trotz der Verwendung großer Füllquerschnitte je nach Produkt zu einer starken Schaumbildung sowie zum Schwappen des Produktes beim ruckartigen Weitertransport der Verpackungen. Dies ist unerwünscht, da hierdurch unter Umständen die unmittelbar nach dem Füllen miteinander zu versiegelnden Ränder der Verpackungen mit Füllgut benetzt werden, wodurch die Siegelqualität beeinträchtigt wird. Weiter kann dies zu Füllmengenschwankungen führen.

Ein Vorschlag, die Verweilzeit zu erhöhen, ist aus der DE 10 356 073 B4 bekannt. Bei dieser Ausgestaltung werden die Verpackungen durch zwei voneinander unabhängige Transporteinrichtungen, nämlich die Transportkette und die Nebenkette, bewegt. Durch die Nebenkette können die Verpackungen mit einem größeren Index bewegt werden, als dies durch die Transportkette der Fall ist. Der Takt der Verpackungsmaschine wird jedoch durch die Transportkette vorgegeben und die Packungen werden an die Nebenkette ausgekoppelt und nach dem Befüllen von der Nebenkette wieder auf die Transportkette eingekoppelt.

Dies ist aufwendig und mechanisch anspruchsvoll. Insbesondere sind zwei voneinander unabhängige Ketten zu betreiben, was den Wartungsaufwand enorm erhöht. Ferner sind die Übergabestellen zwischen den unabhängigen Ketten mechanische anfällig. DE 10 2012 223173 A1 offenbart eine Füllmaschine mit einem elektromagnetischen Linearmotor, wobei eine Steuereinheit vorgesehen ist, welche Läufer, einzelne Stationen entlang einer Laufstrecke sowie eine Förderschnecke steuert. Hierbei ist die Steuereinheit eingerichtet, die einzelnen Läufer jeweils individuell zu steuern. Dadurch kann bei schon befüllten, aber noch offenen Behältnissen ein Anfahrvorgang anders ausgelegt werden als bei noch leeren Behältnissen, um ein Schwappverhalten der Flüssigkeit im Behältnis zu optimieren.

Somit lag gegenständlich die Aufgabe zugrunde, eine getaktete Verpackungsmaschine für das Verpacken und/oder Abfüllen von Produkten in insbesondere nach oben offene Verpackungen zu verbessern.

Diese Aufgabe wird gegenständlich durch eine Verpackungsmaschine nach Anspruch 1gelöst.

Zunächst sei angemerkt, dass die Merkmale jedes einzelnen abhängigen Anspruchs auch ohne das kennzeichnende Merkmal der unabhängigen Ansprüche in Verbindung mit einem oder mehreren Merkmalen des Oberbegriffs der unabhängigen Ansprüche und/oder anderen hier beschriebenen oder in den Ansprüchen genannten Merkmalen zum Gegenstand der Offenbarung gehören. Insbesondere ist eine beliebige Kombination der in den Ansprüchen als auch in der Beschreibung genannten Merkmale gegenständlich offenbart, ohne dass eines der Merkmale hervorzuheben ist.

Aus der Praxis sind Karton/Kunststoff-Verbundverpackungen bekannt, die für unterschiedliche fließfähige oder schüttfähige Produkte verwendet werden. Das hauptsächliche Anwendungsgebiet entsprechender Karton/Kunststoff-Verbundpackungen ist das Abpacken von Getränken und pasteurisierten Nahrungsmitteln. Die bekannten Packungen bzw. Verpackungen sind in unterschiedlichen Formen erhältlich. Diese sind typischerweise quaderförmig, kubisch und zylindrisch. Die größten Unterschiede bestehen noch hinsichtlich des Packungskopfs, der überwiegend als sogenannter Flachgiebel oder Schräggiebel ausgebildet ist.

Verpackungen können auf unterschiedliche Weisen und aus verschiedensten Materialien hergestellt werden. Eine weit verbreitete Möglichkeit ihrer Herstellung besteht darin, aus dem Verpackungsmaterial einen Zuschnitt herzustellen, aus dem durch Falten und weitere Schritte zunächst ein Packungsmantel hergestellt wird und ein Ende desselben verschlossen werden kann. Durch das noch wenigstens teilweise offene andere Längsende des Packungsmantels kann die Packung dann gefüllt werden. Bei einigen dieser Verfahren wird dazu ein Packmittmittelzuschnitt an einen Dorn eines Dornrads angeformt.

Diese Herstellungsart hat unter anderem den Vorteil, dass die Zuschnitte und Packungsmäntel sehr flach sind und somit platzsparend gestapelt werden können. Auf diese Weise können die Zuschnitte bzw. Packungsmäntel an einem anderen Ort hergestellt werden, als die Faltung und Befüllung der Packungsmäntel erfolgt. Als Material werden häufig Verbundstoffe eingesetzt, beispielsweise ein Verbund aus mehreren dünnen Lagen aus Papier, Pappe, Kunststoff oder Metall, insbesondere Aluminium. Derartige Verpackungen finden insbesondere in der Lebensmittelindustrie große Verbreitung.

Es sei angemerkt, dass wenn nachfolgend von Verpackungen, Verpackungsmäntel, Packungen oder Packungsmäntel die Rede ist, diese Begriffe austauschbar verwendet werden können und in der Regel auch im Sinne der obigen Beschreibung gebildet sein können.

Gegenständlich wird eine Abkehr von herkömmlichen Transportketten oder Transportbändern vollzogen. Die Verpackungen werden mit Hilfe von Transportschlitten bewegt. Die Transportschlitten sind dabei entlang zumindest einer Transportschiene beweglich angeordnet. Die Transportschiene und die Transportschlitten bilden zusammen einen elektromotorischen Antrieb, insbesondere in Form eines Linearmotors.

Die Transportschiene gibt die Transporttrajektorie der Transportschlitten vor. Jeder einzelne Transportschlitten ist auf der Transportschiene unabhängig und individuell ansteuerbar. Durch die elektromotorische Wirkverbindung zwischen der Transportschiene und den Transportschlitten kann jeder einzelne Transportschlitten stets individuell angesteuert werden und mit einer einstellbaren Geschwindigkeit, mit einem einstellbaren Beschleunigungsprofil, einem einstellbaren Hub und/oder an einen einstellbaren Ort der Transportschiene bewegt werden. Start und Stopp Zeiten für die Bewegung der einzelnen Transportschlitten sind ebenfalls individuell einstellbar.

Die gegenständliche Verpackungsmaschine arbeitet zumindest abschnittsweise getaktet. Dies beutet, dass ein Takt aus einer Vorschubzeit und einer Verweilzeit gebildet ist. Während der Vorschubzeit wird der Transportschlitten zwischen zwei Arbeitsstationen der Verpackungsmaschine bewegt. In der Verweilzeit ist der Transportschlitten in der durch die Transportschiene vorgegebenen Bewegungsrichtung unbewegt und die an dem Transportschlitten angeordnete Verpackung kann weiterverarbeitet werden, insbesondere sterilisiert, befüllt, verschlossen und/oder verarbeitet werden.

Entlang eines Produktivbereichs (auch als Prozessbereich zu bezeichnen) kann eine Mehrzahl an Arbeitsstationen der Verpackungsmaschine angeordnet sein. Mit jedem Takt können die Transportschlitten/Verpackungen jeweils zu einer stromabwärts folgenden, insbesondere zur unmittelbar nächsten oder zur übernächsten Arbeitsstation bewegt werden und dort weiterverarbeitet werden. Nach dem Vorschub und der Verweilzeit kann ein Takt zu Ende sein und es erfolgt der nächste Takt.

Vorzugsweise kann an einem Transportschlitten ein Träger angeordnet sein, auf dem zumindest eine Verpackung, vorzugsweise jedoch zwei oder mehr als zwei Verpackungen, gleichzeitig getragen werden. Der Träger kann dabei mechanisch so ausgestaltet sein, dass er den Boden einer Verpackung aufnehmen kann. Der Träger kann mechanisch auch so ausgestaltet sein, dass er eine Verpackung klemmend, vorzugsweise seitlich klemmend aufnehmen kann Insbesondere kann der Träger von dem Transportschlitten relativ einfach entfernt und durch einen anderen Träger ausgetauscht werden. Somit kann der Transportschlitten für verschiedene Arten von Trägern als Führungsmedium dienen und auf verschiedenen Träger können verschiedene Verpackungstypen mit ggf. verschiedenen Querschnitten oder Formen zum Einsatz kommen.

Auch wird vorgeschlagen, dass ein Träger verschiedene Verpackungen derart aufnehmen kann, dass unabhängig von der Längenausdehnung der Verpackung bei verschiedenen Verpackungen jeweils an zumindest einem Ort der Transportschiene eine Oberkante der Verpackungen auf einem gleichen Niveau, insbesondere einem gleichen Abstand zur Transportschiene hat. Hierbei kann der Träger die Verpackungen entweder an verschiedenen Positionen in Längsrichtung aufnehmen oder der Träger kann die relative Lage der Verpackungen zur Transportschiene, insbesondere quer bzw. rechtwinklig zur Transportschiene verstellen. Hierdurch kann erreicht werden, dass eine Oberkante einer Verpackung, unabhängig von der Längsausdehnung einer Verpackung, an zumindest einer Stelle entlang der Transportschiene einen gleichen Abstand zu der Transportschiene hat. Dies ist insbesondere bei Verpackungen mit verschiedenen Füllvolumina sinnvoll, da hierdurch stets der gleiche Abstand einer Öffnung zu z.B. einer Fülleinrichtung eingehalten werden kann und die Verpackungen in einem gleichen Abstand entlang der Fülleinrichtung bewegt werden können und dort befüllt werden können.

Wie bereits erläutert, werden die Transportschlitten wenigsten abschnittsweise getaktet entlang eines Produktivbereichs bewegt. In einem Takt wird der Transportschlitten während einer Vorschubzeit bewegt und während einer Verweilzeit verweilt der Schlitten in der vorgegebenen Bewegungsrichtung unbewegt an einer Arbeitsstation. Auch kann der Schlitten eine Arbeitsstation durchfahren. Gegenständlich ist erkannt worden, dass durch die elektromotorische Wirkverbindung zwischen der Transportschiene und dem Transportschlitten und die somit individualisierte Ansteuerbarkeit jedes einzelnen Transportschlittens entlang des Produktivbereichs das Verhältnis zwischen Haltezeit und Vorschubzeit variabel gestaltet werden kann. Dies ist insbesondere aus dem Grunde interessant, da die Verweilzeit insbesondere bei der Abfüllung von flüssigen Produkten in die Verpackung möglichst lang sein sollte, um die Füllmenge, die Füllqualität und/oder Schaumbildung sowie ggf. Schwappen zu verhindern. Die Vorschubzeit sollte vorzugsweise so ausgelegt sein, dass ein Schwappen reduziert wird. Dies kann insbesondere über ein Beschleunigungsprofil während des Vorschubs realisiert sein.

Daher wird vorgeschlagen, dass entlang des Produktivbereichs die Transportschlitten mit zumindest zwei voneinander verschiedenen Indizes bewegt werden. Ein erster Index gebildet aus Verweil- und Vorschubzeit kann beispielsweise in etwa eins sein. Das bedeutet, dass in einem Takt, welcher aus Verweil- und Vorschubzeit gebildet ist, die Verweilzeit in etwa gleich groß der Vorschubzeit ist. Entlang des Produktivbereichs ist es jedoch möglich, dass mit derselben Taktung das Verhältnis zwischen Verweil- und Vorschubzeit variabel ist und somit der Index variabel ist. Dies ist mit herkömmlichen Kettenantrieben nicht möglich, da die Verpackung stets auf derselben Kette geführt werden, welche für alle Verpackungen den gleichen Index darstellt.

Die Verwendung von zwei unterschiedlichen Ketten, wie aus der DE 10 356 073 B4 bekannt, ist mechanisch aufwendig. Gegenständlich wird in einer mechanisch besonders einfachen Art und Weise, nämlich durch Transportschiene und Transportschlitten, die Realisierung von unterschiedlichen Indizes entlang des Produktivbereichs ermöglicht.

Entlang des Produktivbereichs kann mit Hilfe des Transportschlittens und der Transportschiene der Index variiert werden. Zur Variation des Index ist es auch möglich, dass bei einem ersten Index eine Verpackung bzw. ein Transportschlitten mit jedem einzelnen Takt vorgeschoben wird und eine Verweilzeit hat. Ein davon verschiedener Index kann dadurch realisiert sein, dass Vorschub- und Verweilzeit, insbesondere mehrere Takte, beispielsweise zwei Takte beinhaltet. D.h., dass während eines ersten Taktes zumindest der Vorschub und gegebenenfalls teilweise eine Verweilzeit an einer einzigen Arbeitsstation realisiert ist und zu einem zweiten Takt kein erneuter Vorschub erfolgt, sondern lediglich eine Verweilzeit an der zuvor angefahrenen Arbeitsstation realisiert ist.

Das bedeutet, dass eine erste Arbeitsstation (die in bspw. einen einfachen Index angefahren wird) in genau einem Takt die Verpackung weiter verarbeiten muss, eine zweite Arbeitsstation (die in bspw. einen N-fachen (N=2, 3, 4, ...) Index angefahren wird) dies jedoch in N Takten realisieren kann.

Um das Befüllen von taktweise bewegten Verpackungen so auszugestalten, dass die Füllqualität des Befüllens verbessert werden kann, z.B. um exakt reproduzierbare Füllmengen zu erreichen, wird auch vorgeschlagen, dass die Transportschlitten im Produktivbereich im Bereich einer Fülleinrichtung, insbesondere einer Abfülleinrichtung, mit einem verschiedenen, insbesondere größeren Index bewegt sind, als außerhalb der Fülleinrichtung. So ist es beispielsweise möglich, dass die Verpackungen außerhalb der Fülleinrichtung mit einem einfachen Index bewegt werden. In diesem Fall wird z.B. pro Takt der Transportschlitten beispielsweise einmal vorgeschoben und verweilt eine Verweilzeit an der Arbeitsstation. Innerhalb der Fülleinrichtung kann ein größerer Index, beispielsweise ein N-facher Index realisiert sein. In diesem Fall wird die Verpackung innerhalb von N Takten nur einmal vorgeschoben und verbleibt dafür eine längere Verweilzeit an der Arbeitsstation.

Durch die längere Verweilzeit, welche durch den höheren Index realisiert ist, ist die Füllzeit erhöht. Dies ermöglicht es, das abzufüllende Produkt mit einem geringeren Volumenstrom in die Verpackung zu bringen. Dies erhöht die Füllqualität.

Wird ein größerer Index realisiert, insbesondere ein N-facher Index, so kann es notwendig sein, die Anzahl an identischen Arbeitsstationen entsprechend zu erhöhen. D.h., dass wenn die Verpackungen durch die Transportschlitten in der Fülleinrichtung mit einem N-fachen Index bewegt werden, die Anzahl der Füllstationen entsprechend N-fach erhöht werden sollte. Insbesondere ist kann dies sinnvoll sein, um Verpackungen gleich getaktet in den Produktivbereich einschleusen und aus dem Produktivbereich ausschleusen zu können. Wird für das Verpacken z.B. ein doppelter Index benötigt, sollten vorzugsweise gleichzeitig zwei Verpackungen befüllt werden können, um nach Ablauf von zwei Takten auch zwei Verpackungen befüllt zu haben. Dies entspricht der Abfüllrate mit einer Fülleinrichtung bei einem einfachen Index. Hierbei würde jede einzelne Verpackung innerhalb nur eines Taktes abgefüllt werden, somit nach zwei Takten zwei Verpackungen.

Bei einem doppelten Index kann z.B. die Zeit, die eine Verpackung an der Fülleinrichtung verbringt, zwei Takte betragen, so dass in dieser Zeit auch zwei Verpackungen in einer Fülleinrichtung verarbeitet werden müssen. Der Ausstoß am Ende der Fülleinrichtung entspricht dann exakt der gleichen Anzahl an Verpackungen, welche in die Fülleinrichtung eingebracht wurden.

Wie bereits erläutert, kann der Index durch die Haltezeit an einer Arbeitsstation und einer Vorschubzeit zwischen zwei Arbeitsstationen bestimmt sein. Auch kann der Index durch die Anzahl an Takte bestimmt sein, die eine Arbeitsstation zur Verfügung haben soll, um die Verpackung weiter zu verarbeiten. Insbesondere kann es sinnvoll sein, zumindest zwei Takte an der Fülleinrichtung, insbesondere der Abfülleinrichtung zu verwenden. In diesem Fall kann die Haltezeit an der Fülleinrichtung, insbesondere der Abfülleinrichtung als Arbeitsstation, gegenüber der Vorschubzeit vergrößert sein.

Der Index kann auch ein nicht ganzzahliges Vielfaches von 1 sein, insbesondere 1,5 oder 0,5.

Durch den erhöhten Index kann erreicht werden, dass insbesondere in einem Takt der Vorschubhub bei gleicher Vorschubzeit gegenüber einem geringeren Index vergrößert ist. Für den größeren Hub wird eine höhere Geschwindigkeit der Transportschlitten benötigt. In gleicher Vorschubzeit werden die Transportschlitten somit über eine größere Transportstrecke transportiert. Hierdurch wird ein Freiraum zwischen Transportschlitten, die mit einfachem Index bewegt werden und den Transportschlitten, die mit erhöhtem Index bewegt werden, vergrößert.

Durch den bei einem größeren Index zunächst ausgeführten größeren Transporthub bspw. im ungefülltem Zustand, steht für den eigentlichen Füllvorgang der Verpackung mehr Zeit zur Verfügung, bis die neuen leeren Verpackungen an die gerade in Befüllung befindlichen Verpackungen herangeführt werden. Ein langsameres Füllen bei stehender Verpackung kann die Schaumbildung deutlich reduzieren, ohne dass es zu einer Verzögerung der Rate der Verpackungsmaschine kommen muss.

Bei dem in die Verpackungen zu befüllenden Produkt kann es sich um eine Flüssigkeit, aber auch um pastöse Produkte mit oder ohne stückige Anteile handeln. Auch können die Produkte schüttfähig oder pulverförmig sein.

Durch die Erhöhung des Index ist es zur Erreichung einer durchgehend gleichen Taktung über den gesamten Produktivbereich vorteilhaft, wenn die Fülleinrichtung gleichzeitig zumindest zwei in Transportrichtung hintereinander angeordnete Verpackungen befüllen kann. Dies ist vorteilhaft, da auf diese Weise mehrere benachbarte Verpackungen vorzugsweise gleichzeitig mit einem erhöhten Index in Transportrichtung vorgeschoben werden können und für ein Mehrfaches der Taktzeit für den Füllvorgang zur Verfügung stehen. Es ist erkannt worden, dass durch die Erhöhung des Index, insbesondere durch die Variation von Verweilzeit zur Vorschubzeit, der tatsächliche Füllvorgang auch unabhängig von dem sonstigen Takt der Transportschlitten sein kann.

Gemäß einem Ausführungsbeispiel wird vorgeschlagen, dass jeweils zumindest N-Transportschlitten mit einem N-fachen Index in der Fülleinrichtung bewegt sind, wobei N zumindest zwei ist. Es ist erkannt worden, dass entsprechend der Erhöhung des Index im Bereich der Fülleinrichtung eine Anzahl an Transportschlitten mit diesem Index entsprechen erhöht werden sollte. Dies hat den Vorteil, dass die Gesamtrate entlang des Produktivbereichs gleich bleiben kann. In diesem Fall ist es vorteilhaft, wenn in dem entsprechenden Füllbereich N Fülleinrichtungen vorgesehen sind bzw. wenn in dem Füllbereich N Verpackungen gleichzeitig befüllt werden können.

Die Erhöhung des Index geht insbesondere mit der Erhöhung der Vorschubgeschwindigkeit und/oder des Transporthubs einher. Aus diesem Grunde wird vorgeschlagen, dass zumindest zwei Transportschlitten mit einer unterschiedlichen, vorzugsweise erhöhten, insbesondere zumindest doppelten Vorschubgeschwindigkeit in der Fülleinrichtung bewegt sind. Insbesondere ist die unterschiedliche, vorzugsweise erhöhte, insbesondere vorzugsweise doppelte Vorschubgeschwindigkeit in dem Bereich realisiert, in dem der erhöhte Index realisiert ist.

Auch wird vorgeschlagen, dass zumindest zwei Transportschlitten mit einem unterschiedlichen, vorzugsweise erhöhten, insbesondere vorzugsweise zumindest doppelten Transporthub in der Vorschubzeit bewegt sind. Somit ist der Transporthub bei dem größeren Index gegenüber dem Transporthub bei einem einfachen Index erhöht.

Gemäß einem Ausführungsbeispiel wird vorgeschlagen, dass die Vorschubzeit zwischen jeweils zwei Arbeitsstationen im Produktivbereich konstant ist.

Insbesondere ist beim Übergang vom geringeren Index auf den höheren Index die Vorschubzeit konstant. D.h., dass die Vorschubzeit beim Vorschub des Transportschlittens zu der letzten Arbeitsstation mit dem ersten Index gleich ist, wie die Vorschubzeit des Transportschlittens von dieser Arbeitsstation zur nächsten Arbeitsstation, wobei im letzteren Fall der Index bereits erhöht ist, insbesondere verdoppelt ist. Bei gleicher Vorschubzeit ist vorzugsweise der Transporthub jedoch vergrößert, insbesondere verdoppelt.

Im Bereich des höheren Index ist die Transportgeschwindigkeit in der Regel höher, als im Bereich des niedrigeren Index. Durch die erhöhte Transportgeschwindigkeit, vorzugsweise bei einem konstanten Transporthub kann erreicht werden, dass die Verweilzeit an der Arbeitsstation erhöht ist. Diese erhöhte Verweilzeit kann dazu genutzt werden, die Verpackung mit dem zu verpackenden Gut zu befüllen. Wird der Index erhöht, insbesondere zumindest verdoppelt, wird eine Verpackung im Bereich des höheren Index vorzugsweise mit einer erhöhten Geschwindigkeit bewegt. Insbesondere ist hierdurch ein erhöhter Transporthub bei gleicher Transportzeit ermöglicht. Durch die höhere Geschwindigkeit wird erreicht, dass die Verweilzeit an einer Fülleinrichtung erhöht ist.

Auch wird vorgeschlagen, dass die Verweilzeit (Haltezeit) von zumindest zwei Transportschlitten an zumindest einer der Fülleinrichtungen größer oder kleiner, insbesondere als die Verweilzeit der Transportschlitten außerhalb der Fülleinrichtung ist, insbesondere zumindest das doppelte der Haltezeit der Packungen außerhalb der Fülleinrichtung ist.. In diesem Zusammenhang sei erwähnt, dass die Begriffe Haltezeit und Verweilzeit gleichwertig verwendet werden können.

Wie bereits erläutert, ist ein Takt insbesondere durch eine Vorschub- und eine Verweilzeit bestimmt. Im Bereich des höheren Index ist in der Vorschubzeit vorzugsweise ein höherer Transporthub realisiert. Aus diesem Grunde wird vorgeschlagen, dass der Transporthub der Transportschlitten im Produktivbereich zwischen jeweils zwei Arbeitsstationen in einem Takt verschieden ist. D.h., dass zwischen zwei ersten Arbeitsstationen, insbesondere bei einem niedrigeren Index, ein erster Transporthub realisiert ist und zwischen zwei Arbeitsstationen, wenn ein höherer Index realisiert ist, der Transporthub erhöht ist. In einem ersten Takt kann eine Verpackung somit beispielsweise einen ersten Transporthub zurücklegen und in einem darauffolgenden Takt kann dieser Verpackung einen zweiten Transporthub zurücklegen, der vorzugsweise größer, insbesondere zumindest das Doppelte des ersten Transporthubs ist. Ist die Vorschubzeit gleich, so kann die Geschwindigkeit in diesem zweiten Takt das Doppelte der Geschwindigkeit des ersten Taktes sein.

Durch die individuelle Ansteuerbarkeit der einzelnen Transportschlitten ist es möglich, unterschiedliche Beschleunigungsprofile während der Vorschubzeit zu realisieren. Die verschiedenen Beschleunigungsprofile können an den Zustand der Verpackung angepasst sein. So ist es beispielsweise möglich, eine gefüllte Verpackung mit einem weniger steilen Beschleunigungsprofil zu beschleunigen, als eine nicht gefüllte Verpackung. Das Beschleunigungsprofil kann auch an dem Packungsinhalt angepasst werden, beispielsweise abhängig von der Viskosität des jeweils in der Verpackung eingefüllten Produktes sein.

Die Transportschiene ist vorzugsweise in verschiedene Bereiche unterteilt. Die Transportschiene kann sich von einem Einschleusebereich über einen Produktivbereich in einen Ausschleusebereich und gegebenenfalls einen Pufferbereich erstrecken. Arbeitsstationen können sowohl im Einschleusebereich, im Produktivbereich als auch im Ausschleusebereich angeordnet sein. Insbesondere im Produktivbereich können verschiedene Arbeitsstationen vorgesehen sein, worunter insbesondere auch eine Füllstation bzw. eine Fülleinrichtung vorgesehen sein kann. Entlang des Produktivbereichs können die Transportschlitten in Beförderungsrichtung der Verpackungen mit unterschiedlichen Indizes bewegt sein. Hierbei ist es möglich, dass die Transportschlitten an einigen Arbeitsstationen nur während eines Taktes verweilen, an anderen Arbeitsstationen jedoch zumindest während zweier Takte verweilen. Die Verweilzeit ist dabei die nach der Vorschubzeit verbleibende Zeit innerhalb eines Taktes oder innerhalb mehrerer Takte. Auch kann die Verweilzeit an jeder Station unterschiedlich sein, solange nach Ablauf des Taktes die Verpackung an die nächste Station bewegt wird, so dass die folgende Verpackung an der Station bearbeitet werden kann. Dies kann insbesondere für die Fülleinrichtung der nachfolgenden Stationen sinnvoll sein, da bei einer kürzeren Verweilzeit die Vorschubzeit erhöht sein kann, was zur Reduktion der Beschleunigung führt und somit dem Schappen entgegenwirkt.

Vorgeschlagen wird auch, dass die Transportrichtung bzw. die Bewegungsrichtung der Transportschlitten in Bereichen winklig zueinander verlaufen, insbesondere in zumindest einem Bereich vertikal und in zumindest einem Bereich horizontal verläuft. Winklig kann einen Winkel zwischen 30° und 60 einschließen. Somit werden die Transportschlitten entlang einer Trajektorie, die durch die Transportschiene gebildet ist winklig zueinander bewegt. Die Bewegungsrichtungen sind vorzugsweise vertikal und horizontal.

Wie bereits erläutert, sind Transportschlitten und Transportschiene elektromotorisch in Wirkverbindung miteinander. Insbesondere erfolgt ein Antrieb der Transportschlitten elektromagnetisch. Hierbei können Transportschiene und Transportschlitten einen Linearmotor bilden. Der Vorteil des Linearmotors ist, dass jeder einzelne Transportschlitten individuell ansteuerbar ist. Hierzu weist jeder einzelne Transportschlitten vorzugsweise eine elektromagnetisch auslesbare Kennung auf. Ferner hat die Transportschiene Lesemittel, um die Position eines jeden Transportschlittens sowie die Kennung des Transportschlittens auslesen zu können. Dadurch kann durch eine geeignete Ansteuerung der Transportschiene eine individuelle Ansteuerung jedes einzelnen Transportschlittens erfolgen.

Ein Transportschlitten weist einen Träger auf, der zur Aufnahme von vorzugsweise nach oben hin geöffneten, vorzugsweise am Boden bereits
geschlossenen Verpackungen gebildet ist. Vorzugsweise können auf einem oder durch einen solchen Träger mehrere Verpackungen nebeneinander, quer zur Bewegungsrichtung der Verpackungen aufgenommen werden. Hierdurch ist eine parallele Verarbeitung von nebeneinander, quer zur Transportrichtung angeordneten Verpackungen möglich, so dass der Durchsatz der Verpackungsmaschine entsprechend der Anzahl der nebeneinander angeordneten Verpackungen erhöht werden kann.

Gemäß einem Ausführungsbeispiel wird vorgeschlagen, dass die Transportschiene aus einem Stator des Linearmotors gebildet ist und insbesondere eine Mehrzahl entlang der Transportschiene angeordnete Magnetspulen aufweist. Durch eine geeignete Ansteuerung bzw. Erregung der Magnetspulen lässt sich das Magnetfeld entlang der Transportschiene variieren und vorzugsweise in Bewegungsrichtung verschieben. Die Transportschlitten können so dem sich verschiebenden Magnetfeld folgen. Vorzugweise ist die Anzahl der individuell ansteuerbaren Magnetfelder zumindest entsprechend der Anzahl der Transportschlitten auf der Transportschiene. Somit ist jeder einzelne Transportschlitten individuell ansteuerbar. Dies bedingt jedoch einen Mindestabstand zwischen den Transportmitteln zueinander, so dass die durch die Transportschiene induzierten Magnetfelder sich einander nicht so beeinflussen, dass der jeweils durch ein Magnetfeld bewegte Transportschlitten durch das andere Magnetfeld bewegt wird.

Die Transportschlitten folgen dem Magnetfeld der Transportschiene insbesondere dann, wenn diese als Permanentmagneten gebildet sind. Der Vorteil der Auslegung der Transportschlitten mit einem Permanentmagneten liegt darin, dass es nicht notwendig ist, die Transportschlitten bzw. darin angeordnete Magnetspulen elektrisch zu erregen, was einen elektrischen Kontakt zwischen den Transportschlitten und einer Kontaktschiene bedingte.

Vorzugsweise ist die Transportschiene Teil eine Transportvorrichtung, durch welche die Transportschlitten vorzugsweise umlaufend bewegt werden. Die

Transportschiene bildet dabei vorzugweise einen Schenkel der Transportvorrichtung. Die Transportvorrichtung kann zumindest drei winklig zueinander verlaufende Schenkeln aufweisen. Die Transportvorrichtung bildet vorzugsweise einen geschlossenen Ring mit insbesondere zumindest drei Schenkeln, von denen zumindest ein Schenkel eine Transportschiene ist.

Gemäß einem Ausführungsbeispiel wird vorgeschlagen, dass die Transportvorrichtung zumindest zwei einander gegenüberliegende Schenkel aufweist, wobei ein erster der Schenkel den Produktivbereich bildend, zumindest teilweise in der Fülleinrichtung der Verpackungsmaschine geführt ist und ein zweiter der Schenkel einen Pufferbereich bildet. Pufferbereich und Produktivbereich liegen somit auf einander gegenüberliegenden Seiten der Transportschiene. Zwischen dem Pufferbereich und dem Produktivbereich kann jeweils entweder ein Einschleusebereich oder ein Ausschleusebereich vorgesehen sein. Zumindest einer der gegenüberliegenden Schenkel kann als Transportschiene gebildet sein.

Aufgefaltete Verpackungsmäntel, insbesondere mit einem verschlossenen Boden, werden im Einschleusebereich an einen jeweiligen Transportschlitten bzw. dessen Träger herangeführt. Im Einschleusebereich werden die Verpackungen durch den Träger aufgenommen und zu dem Produktivbereich geführt. Im Produktivbereich werden die Transportschlitten getaktet bewegt, wobei in dem Produktivbereich zumindest zwei verschiedene Indizes der Transportbewegung der Transportschlitten realisiert sind. Nach dem Produktivbereich werden die gefüllten, vorzugsweise verschlossenen Verpackungen an den Ausschleusebereich durch die Transportschlitten geführt und dort von der Transportschiene ausgeschleust.

Bei der Bewegung entlang der Transportschiene ist es möglich, dass im Produktivbereich die Transportschlitten bzw. die Träger der Transportschlitten die Verpackungen aufrecht stehend führen. Die Verpackungen sind dabei vorzugsweise so durch die Träger bzw. die Transportschlitten gehalten, dass sie im Einschleusebereich und/oder Ausschleusebereich auch geneigt zur Waagerechten gehalten werden können. Die Verpackungen werden im Einschleusebereich, im Produktivbereich und vorzugsweise im Ausschleusebereich entlang einer linearen Vorschubrichtung bewegt. Die Transportschiene kann dabei jedoch in einem Winkel verlaufen, derart, dass beispielsweise in einem Ausschleusebereich und/oder einem Einschleusebereich die Transportschiene zumindest teilweise vertikal verläuft und im Produktivbereich zumindest teilweise horizontal verläuft. Die Bereiche können winklig zueinander sein.

Die Träger für die Verpackungen sind an dem Transportschlitten befestigt. Über Magnetverbindungen oder Clickverbindungen werden die Träger an dem Transportschlitten angeordnet, so dass sie leicht austauschbar sind. Auch ist es möglich, dass zwei Transportschlitten zueinander so beweglich sind, dass sie die Verpackung greifend aufnehmen. Dabei kann eine nach hinten (zur Bewegungsrichtung) weisende Kante eines ersten Transportschlittens bzw. eines ersten Trägers mit einer nach vorne (zur Bewegungsrichtung) weisenden Kante eines nachfolgenden Transportschlitten bzw. Trägers so interagieren, dass die Verpackung zwischen der hinteren Kante und der vorderen Kante verklemmt ist. Hierzu können die Transportschlitten im Einschleusebereich so aufeinander zu bewegt werden, dass ein Verklemmen der Verpackungen zwischen den Transportschlitten bzw. den daran angeordneten Trägern erfolgen kann.

Die Transportschlitten können an der Transportschiene geführt werden. Zwar ist die Bewegung der Transportschlitten entlang der Transportschiene vorzugsweise elektromagnetisch, insbesondere in der Form eines Linearmotors, jedoch reicht eine magnetische Führung nicht vollständig aus, die Transportschlitten an der Transportschiene zu halten. Daher wird vorgeschlagen, dass die Transportschlitten mit einer U-förmigen, I-förmigen, L-förmigen, S-förmigen oder C-förmigen Aufnahme an der Transportschiene angeordnet sind. Die Transportschlitten können die Transportschiene mit ihren Aufnahmen klammerartig umgreifen. Quer zur Bewegungsrichtung sind die Transportschlitten formschlüssig angeordnet. Hierdurch wird verhindert, dass die Transortschlitten von der Transportschiene rutschen.

Insbesondere bei einem winkligen Verlauf der Transportschiene z.B. aus der Horizontalen in die Vertikale, ist diese Anordnung sinnvoll.

Der Pufferbereich ist vorzugsweise derart, dass dort die Transportschlitten nach unten weisend verlaufen, wohingegen im Produktivbereich die Transportschlitten nach oben weisend verlaufen. Im Pufferbereich soll verhindert werden, dass die Transportschlitten von der Transportschiene abfallen. Dies wird durch die Aufnahme erreicht, wobei die Aufnahme beiderseits der Transportschiene in umlaufende Nuten eingreifen kann.

Wie bereits erläutert, ist an einem Transportschlitten vorzugsweise ein Träger zur Aufnahme von zumindest zwei Verpackungen angeordnet. Der Träger ist vorzugsweise derart am Transportschlitten angeordnet, dass er rechtwinklig zur Bewegungsrichtung des Transportschlittens mehrere Aufnahmen nebeneinander aufweist, an denen Verpackungen angeordnet werden können. Ein Träger kann beispielsweise T-förmig auf einem Transportschlitten aufgesetzt sein. Der Transportschlitten kann vorzugsweise mittig am Träger angeordnet sein. Der Träger kann zur Aufnahme verschiedenförmiger Verpackungen gebildet sein. Auf einem Träger können zumindest zwei Verpackungen, auch mit verschiedenen Querschnitten angeordnet sein.

Auch ist es möglich, dass zumindest zwei parallel verlaufende Transportschienen vorgesehen sind. Die Transportschienen sind vorzugsweise zueinander deckungsgleich in ihrem Verlauf und nebeneinander mit einem konstanten Abstand zueinander angeordnet. Auf jeder der Transportschienen sind Transportschlitten vorgesehen. Jeweils zwei Transportschlitten sind synchronisiert auf den beiden Transportschienen geführt. D.h., dass auf jeder Transportschiene jeweils ein Transportschlitten vorgesehen ist, der mit jeweils einem anderen Transportschlitten auf der anderen Transportschiene synchronisiert ist. Die Synchronisation bedeutet, dass die Transportschlitten möglichst gleichförmig entlang der jeweiligen Transportschiene bewegt werden. Die Position der Transportschlitten in Bewegungsrichtung auf den Transportschienen ist dabei vorzugsweise synchronisiert, so dass die Transportschlitten zu jeder Zeit möglichst die gleiche Position auf ihrer jeweiligen Transportschiene einnehmen. Zwischen den Transportschlitten kann ein Träger angeordnet sein, auf dem die Verpackungen angeordnet werden können. Auch können die Transportschlitten derart synchronisiert sein, dass diese verschiedene Geschwindigkeiten haben, so dass die daran angeordneten Träger nicht mehr rechtwinklig zur Transportrichtung verlaufen. Hierbei können die Träger mit einer verstellbaren Länge an den Transportschlitten angeordnet sein, so dass sich der Abstand zwischen den den Träger führenden Transportschlitten vergrößern kann. Hierdurch kann der Winkel des Trägers zur Transportrichtung variiert werden.

Eine besonders gute Synchronisation der Transportschlitten wird dadurch realisiert, dass ein Transportschlitten an einer ersten der Transportschienen als Master-Schlitten angesteuert ist und ein Transportschlitten an einer zweiten der Transportschienen als Slave-Schlitten abhängig von dem Master-Schlitten geführt ist. Eine Master-Slave-Steuerung ermöglicht es, dass der Slave-Schlitten stets synchron zum Master-Schlitten geführt ist. Hierbei gibt der Master-Schlitten vorzugsweise die Position des Schlittens auf der Transportschiene vor und der Slave-Schlitten folgt dieser Position unmittelbar und in Echtzeit. Dadurch wird ein synchroner Lauf der jeweils beiden Transportschlitten entlang ihrer jeweiligen Transportschiene ermöglicht. Auch ein Versatz der Schlitten ist möglich, so dass der Träger nicht mehr rechtwinklig zur Transportrichtung verläuft. Hierzu kann der Träger verschwenkbar und mit einer Längenverstellung an den Transportschlitten angeordnet sein.

Gemäß einem Ausführungsbeispiel wird vorgeschlagen, dass die Transportschiene einen zumindest in Teilen zur Horizontalen winklig, insbesondere vertikal verlaufenden Einschleusebereich aufweist und dass die Transportschlitten im Einschleusebereich zur Aufnahme von leeren Packungsmänteln von einer Zuführeinheit, insbesondere von einem Dornrad gebildet sind. Durch die Einschleusung der leeren Packungsmäntel im Bereich der winklig verlaufenden Transportschiene wird der Produktivbereich besser genutzt. D.h., dass die Raumausnutzung der Verpackungsmaschine gegenüber herkömmlichen Verpackungsmaschinen verbessert ist. Der herkömmlicherweise zur Verfügung stehende Platz in der Horizontalen wird bisher sowohl für die Einschleusung, den Produktivbereich und die Ausschleusung genutzt. Nunmehr erfolgt die Einschleusung bereits in dem winklig verlaufenden Teil der Transportschiene, so dass der gesamte horizontal verlaufende Teil der Transportschiene für den Produktivbereich und die daran vorgesehenen Arbeitsstationen genutzt werden kann. Somit ist es möglich, mehr Arbeitsstationen im Produktivbereich nacheinander entlang der Bewegungsrichtungen der Verpackungen als herkömmlich anzuordnen.

Das gleiche gilt natürlich auch für den Ausschleusebereich. Auch im Ausschleusebereich kann die Transportschiene zumindest in Teilen winklig zur Horizontalen, insbesondere vertikal verlaufen. Im Ausschleusebereich sind die Transportschlitten bzw. die daran angeordneten Träger zum Absetzen von gefüllten Verpackungen an einer Abführeinheit gebildet.

Eine besonders flexible Anwendung der Verpackungsmaschine besteht dann, wenn unterschiedliche Arten von Transportschlitten an der Transportschiene angeordnet werden können. Auch kann es sinnvoll sein, Transportschlitten zumindest teilweise aus der Transportschiene auszukoppeln, um diese gegebenenfalls zu reparieren oder zu reinigen, ohne den Betrieb der Transportschiene bzw. der Verpackungsmaschine maßgeblich zu beeinträchtigen. Aus diesem Grunde wird auch vorgeschlagen, dass die Transportschiene zumindest einen Auskopplungsbereich aufweist. Ein Auskopplungsbereich kann dadurch gekennzeichnet sein, dass die Transportschiene dort verschwenkbar ist, insbesondere quer zur Bewegungsrichtung der Transportschlitten.

Durch das Verschwenken können Transportschlitten aus der Transportschiene ausgekoppelt werden. Diese Auskopplung kann selektiv erfolgen. Ausgekoppelte Transportschlitten müssen auch wieder eingekoppelt werden, so dass die Transportschiene vorzugsweise zumindest ein Einkopplungsbereich aufweist, wobei die Transportschiene im Einkopplungsbereich ebenfalls verschwenkbar ist. Die Verschwenkebene der Transportschiene kann im Auskopplungsbereich und im Einkopplungsbereich gleich sein.

Ein Verschwenken der Transportschiene kann derart sein, dass diese an eine Reserveschiene angeschwenkt wird und die Transportschlitten von der Transportschiene elektromotorisch auf die Reserveschiene geführt werden. Nach dem Auskoppeln kann die Transportschiene wieder zurückschwenken, um so einen Transport weiterer Transportschlitten entlang der Transportschiene zu gewährleisten. Dasselbe kann in dem Einkopplungsbereich erfolgen, in dem die Transportschiene auf die Reserveschiene verschwenkt wird, um neue Transportschlitten einzukoppeln, um anschließend wieder zurück zu verschwenken.

Gemäß einem Ausführungsbeispiel wird vorgeschlagen, dass die Transportschiene im Füllbereich in einer Sterilisationseinheit geführt ist. Die Sterilisationseinheit umschließt vorzugsweise die Transportschlitten umlaufend. Die Sterilisationseinheit dient zur aseptischen Führung der Transportschlitten und/oder Packungen sowie Trägern im Füllbereich. Durch die Sterilisationseinheit werden die Transportschlitten und die Packungen sowie gegebenenfalls die Träger vor dem Befüllen mit dem Produkt sterilisiert. Die Sterilisation wird vorzugsweise mit H₂O₂ durchgeführt. Der Transportkanal der Sterilisationseinheit, in dem die Transportschlitten und gegebenenfalls Packungen und Träger geführt werden, sollte möglichst einen kleinen Querschnitt aufweisen und Transportschlitten, Träger und/oder Verpackungen radial umschließen. Dadurch, dass die Transportschlitten entlang einer Transportschiene geführt werden und keine Transportkette genutzt wird, kann der Führungsquerschnitt der Sterilisationseinheit klein gehalten werden.

Gemäß einem Ausführungsbeispiel wird vorgeschlagen, dass die Sterilisationseinheit die Transportschlitten radial umlaufend umschließt. D.h., dass umlaufend zu der Bewegungsrichtung die Sterilisationseinheit die Transportschlitten umschließt. Insbesondere hat die Sterilisationseinheit ein Gehäuse um die Transportschlitten herum. Entlang der Bewegungsrichtung der Transportschlitten hat die Sterilisationseinheit zumindest eine Eingangsöffnung und eine Ausgangsöffnung, über die die Transportschlitten samt Packungen ein- und ausgeschleust werden. Während des Transports durch die Sterilisationseinheit sind Transportschlitten und/oder Träger und Packungen durch das Gehäuse umhaust und eine Sterilisation kann erfolgen.

Ein besonders kleiner Querschnitt des Gehäuses wird dadurch erreicht, dass das Gehäuse insbesondere in einem Spalt zwischen der Transportschiene und dem Transportschlitten angeordnet ist. Da die Transportschlitten magnetisch geführt sein können, bildet sich ein Spalt zwischen der Transportschiene und dem Transportschlitten. Wird das Gehäuse in diesem Spalt angeordnet, muss eine Sterilisation lediglich des Transportschlittens, des gegebenenfalls vorhandenen Trägers sowie der Packungen erfolgen.

Die Bewegung der Transportschlitten entlang der Transportschiene führt zu einer Bewegung der Umgebungsluft ebenfalls entlang der Bewegungsrichtung. Wird die Sterilisationseinheit so gebildet, dass zunächst Sterilisationsmittel, insbesondere H₂O₂ zugeführt wird, wird dieses Sterilisationsmittel durch den erzeugten Luftzug in die Sterilisationseinheit mitgerissen. Anschließend kann Dampf zugeführt werden, um die Transportschlitten und/oder die Packungen thermisch zu sterilisieren. Auch der Dampf wird durch den durch die Bewegung erzeugten Luftzug entlang der Bewegungsrichtung mitgerissen. Die Zuführung von Dampf für eine Heißsterilisation, insbesondere für eine Dampfsterilisation, kann insbesondere während oder nach dem Zuführen des Produktes erfolgen, insbesondere an oder nach der Fülleinrichtung.

Um das Sterilisationsmittel sicher abführen zu können, insbesondere um zu verhindern, dass Sterilisationsmittel in der Verpackung zusammen mit dem Produkt verbleibt, wird auch vorgeschlagen, dass zwischen der Zuführung von Sterilisationsmittel und der Zuführung von Dampf in der Sterilisationseinheit zumindest eine Abluftöffnung vorgesehen ist. Über die Abluftöffnung kann das über den Luftzug mitgerissene Sterilisationsmittel abgeführt werden. Der hierdurch erzeugte Luftdruck verhindert, dass nicht sterile Luft durch die Abluftöffnung in die Sterilisationseinheit hinein gezogen wird.

Eine besonders gute Reinigung der Arbeitsstationen entlang des Produktivbereichs, insbesondere der Fülleinrichtung kann durch hierfür eingerichtete Transportschlitten erfolgen. So ist es beispielsweise möglich, dass z.B. über ein Ein- und Auskoppeln Reinigungsschlitten mit Reinigungseinheiten auf die Transportschiene gekoppelt werden. Die Reinigungseinheiten an den Reinigungsschlitten können als Träger an den Transportschlitten angeordnet sein. Die Reinigungseinheit kann beispielsweise von der Transportschiene weg weisende Bürsten aufweisen, die beim Transport des Transportschlittens entlang des Produktivbereichs an den Arbeitsstationen eine mechanische Reinigung durchführen. Auch können Reinigungseinheiten vorgesehen sein, die eine vorzugsweise batteriebetriebene Pumpe aufweisen und ein Reservoir von Sterilisationsmittel aufweisen. Wird ein solcher Transportschlitten mit einer Reinigungseinheit entlang des Produktivbereichs geführt, kann die Pumpe aktiviert werden und das Reinigungsmittel, insbesondere das Sterilisationsmittel kann aus dem Reservoir in den Arbeitsbereich gesprüht werden.

Auch ist es möglich, im Pufferbereich die Transportmittel oder Träger zur reinigen und zu sterilisieren. Dies kann entlang der Transportschiene erfolgen oder auch nach dem Auskoppeln auf eine Reserveschiene.

Durch den Pufferbereich ist es möglich, mehr Transportschlitten an der Transportschiene anzuordnen, als für die aktuelle Produktion benötigt werden. Hierdurch ist es möglich, bei einem defekten Transportschlitten diesen auszuschleusen, ohne dass der Produktionsbetrieb außer Takt gerät. Da eine Überanzahl an Transportschlitten in dem Pufferbereich vorgesehen sein können, ist es möglich, einzelne Transportschlitten zwischenzeitlich auszuschleusen, um diese zu reinigen, zu reparieren oder sonstige Maßnahmen daran vorzunehmen. Die restlich verbleibenden Transportschlitten können in der üblichen Taktung über den Einschleusebereich, den Produktivbereich und den Ausschleusebereich entlang der Transportschiene geführt werden.

Der Produktivbereich weist insbesondere folgende Arbeitsstationen alternativ oder kumulativ auf. Zunächst kann eine Sterilisationsstation vorgesehen sein, in der Sterilisationsmittel auf die Schlitten und/oder Träger und/oder Packungen aufgebracht wird, insbesondere aufgesprüht wird. Eine weitere Arbeitsstation kann ein Einwirken des Sterilisationsmittels beinhalten. Eine weitere Arbeitsstation kann ein Trocknen des Transportschlittens, des Trägers und/oder der Packungen beinhalten. Weitere Arbeitsstationen können Fülleinheiten beinhalten, wobei die Fülleinheiten vorzugsweise in doppelter Ausfertigung nacheinander entlang der Transportrichtung angeordnet sind, dass zu einem Zeitpunkt bzw. in einem Takt jeweils zumindest zwei Packungen gefüllt werden können. Die Fülleinrichtungen können unterschiedliche Füllgeschwindigkeiten realisieren und beispielsweise auch unterschiedliche Produktmischungen beinhalten. Auch ist es möglich, dass eine erste Fülleinrichtung Inertgas zuführt, wohingegen eine zweite Fülleinrichtung ausschließlich das zu füllende Produkt zuführt. Eine weitere Arbeitsstation kann das Aufbringen von Dampf und/oder das Falten eines Packungsgiebels beinhalten. Eine weitere Arbeitsstation kann das Versiegeln des Packungsgiebels, insbesondere mit Ultraschall beinhalten. Eine weitere Arbeitsstation kann beispielsweise das Aufbringen von Applikationen, beispielsweise von Ausgießern beinhalten. Die Arbeitsstationen, die nach dem Versiegeln folgen, können auch in einem bereits winlig verlaufenden Ausschleusebereich der Transportschiene angeordnet sein. Eine weitere Arbeitsstation kann ein Ausstoßer sein. Diese Beschreibung des Produktivbereichs ist rein beispielhaft.

Ein weiterer Aspekt ist ein Verfahren nach Anspruch 29.

Wenn zuvor oder nachfolgend von Transportrichtung der Packung und/oder Transportrichtung des Transportschlittens die Rede ist, so sind diese beiden Begriffe gleichbedeutend. Da eine Packung stets entlang der Transportrichtung des Transportschlittens bewegt wird, ob sie nun unmittelbar auf den Transportschlitten aufgesetzt ist oder über ein an dem Transportschlitten angeordneten Träger transportiert wird, ist dabei unerheblich.

Nachfolgend wird der Gegenstand anhand einer Ausführungsbeispiele zeigenden Zeichnung näher erläutert. In der Zeichnung zeigen:
- Fig. 1a-e: den Transport von Transportschlitten entlang einer Transportschiene mit verschiedenen Indizes;
- Fig. 2: den Transport von Transportschlitten entlang einer Transportschiene gemäß einem Ausführungsbeispiel;
- Fig. 3: einen Transportschlitten mit einem Träger gemäß einem Ausführungsbeispiel;
- Fig. 4: einen Querschnitt eines Transportschlittens mit einer Transportschiene und einer Führung gemäß einem Ausführungsbeispiel;
- Fig. 5: zwei parallel verlaufende Transportschienen mit jeweils synchronisierten Transportschlitten gemäß einem Ausführungsbeispiel;
- Fig. 6a: ein Querschnitt einer Sterilisationseinheit mit Reinigung und Sterilluftzufuhr;
- Fig. 6b: eine Ansicht einer Sterilisationseinheit mit Zu- und Abführung von Sterilisationsmitteln und Dampf gemäß einem Ausführungsbeispiel;
- Fig. 7: einen geschlossenen Ring einer Transportschiene gemäß einem Ausführungsbeispiel;
- Fig. 8: eine Führung von Packungen mit Trägern gemäß einem Ausführungsbeispiel;
- Fig. 9: eine Transportschiene mit einer Reserveschiene und einer Möglichkeit der Auskopplung gemäß einem Ausführungsbeispiel.

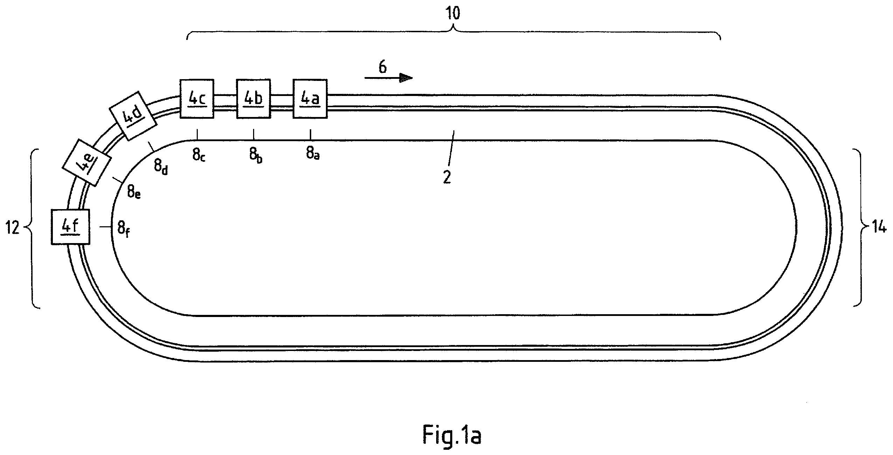

Fig. 1a zeigt eine Transportschiene 2 mit darauf geführten Transportschlitten 4a-f in einer schematischen Ansicht. Die Transportschlitten 4a-f werden auf der Transportschiene 2 elektromotorisch in Bewegungsrichtung 6 bewegt. Dabei wird jeder einzelne Transportschlitten 4a-f vorzugsweise individuell angesteuert, so dass seine Position als auch seine Vorschubbewegung entlang der Transportschiene 2 definiert ist. Entlang der Transportschiene 2 können die Transportschlitten 4a-f definierte Positionen 8_{a-f} einnehmen. Die definierten Positionen 8_{a-f} korrespondieren vorzugsweise mit nicht dargestellten Arbeitsstationen, an denen Packungen, welche auf den Transportschlitten 4a-f transportiert werden, weiter verarbeitet werden. Die Transportschiene 2 kann dabei beispielsweise in einen Produktivbereich 10, einen Einschleusebereich 12 und einen Ausschleusebereich 14 unterteilt sein. In dem Einschleusebereich 12 werden aufgefaltete Verpackungen auf die Transportschlitten 4a-f aufgesetzt und gegebenenfalls vorgereinigt. Im Produktivbereich 10 werden die aufgesetzten Packungen samt der Transportschlitten bzw. Träger einer Sterilisationseinheit zugeführt, sterilisiert und anschließend mit dem Produkt befüllt. Die gefüllten Verpackungen werden zunächst verschlossen und anschließend aus dem Produktivbereich 10 herausgeführt. Die verschlossenen, gefüllten Verpackungen werden im Ausschleusebereich von den Transportschlitten 4a-f bzw. den daran angeordneten Trägern ausgestoßen und einer weiteren Verarbeitung zugeführt.

Die Transportschiene 2 mit den Transportschlitten 4a-f bildet vorzugsweise ein Linearmotor, wobei die Transportschiene 2 vorzugsweise eine Vielzahl von entlang der Bewegungsrichtung 6 nebeneinander angeordneten Spulen aufweist, so dass ein Magnetfeld entlang der Transportschiene 2 gesteuert werden kann. Die Transportschlitten 4a-f sind vorzugsweise gleitend auf der Transportschiene 2 angeordnet und werden über das durch die Transportschiene 2 bzw. die darin angeordneten Spulen magnetisch angetrieben und in Bewegungsrichtung 6 bewegt.

Der Transport der Transportschlitten 4a-f entlang der Bewegungsrichtung 6, welche auch als Vorschubrichtung verstanden werden kann, erfolgt vorzugsweise getaktet. D.h., dass in einem Takt jeweils ein Vorschub von einer Position 8_{a-f} zu der nächsten Position 8_{a-f} erfolgt und anschließend eine Verweilzeit eingehalten wird, in der die Transportschlitten 4a-f auf ihrer jeweiligen Position 8_{a-f} verweilen. Der Vorschub samt Verweilzeit kann als eine Taktdauer verstanden werden.

Der Transporthub entlang der Bewegungsrichtung 6 entspricht dabei dem Abstand zwischen jeweils zwei entlang der Bewegungsrichtung 6 benachbarten Positionen 8_{a-f}. Im Gegensatz zu einen Transportband oder einer Transportkette kann der Transporthub zwischen jeweils zwei Positionen 8_{a-f} variabel sein, da jeder einzelne Transportschlitten 4a-f individuell ansteuerbar ist. Dies ist insofern vorteilhaft, dass die Abstände zwischen den Positionen an den Platzbedarf der jeweiligen Arbeitsstation angepasst werden können, und nicht wie herkömmlich umgekehrt.

Beispielhaft wird der Transportschlitten 4c in einem Takt zunächst während der Vorschubzeit von der Position 8_{c} zu der Position 8_{b} verschoben und anschließend verweilt der Transportschlitten 4c für eine Verweildauer an der Position 8b. Danach erfolgt der nächste Takt, in dem der Transportschlitten 4c an die Position 8a bewegt wird und anschließend eine Verweildauer dort verweilt.

Insbesondere ist die Taktdauer für jeden einzelnen Transportschlitten 4a-f auf der Transportschiene 2 gleich, d.h., die Summe aus Vorschubzeit und Verweilzeit ist gleich. Somit werden die Transportschlitten 4a-f in einer getakteten Bewegung entlang der Transportschiene 2 durch den Einschleusebereich 12, den Produktivbereich 10 und den Ausschleusebereich 14 bewegt.

Jeweils während der Verweilzeit wird an den den jeweiligen Positionen 8_{a-f} zugeordneten Arbeitsstationen ein Arbeitsschritt an den an den Transportschlitten 4a-f angeordneten Verpackungen durchgeführt.

Durch die Verwendung der Transportschiene 2 ist es möglich, den Transporthub (auch Vorschubweg oder Vorschubstrecke genannt), sowie die Verweilzeit, auch Haltdauer genannt, individuell zu gestalten. Das bedeutet, dass beispielsweise ein Transportschlitten 4a-f in einem Takt einen Standardtransporthub und eine Standardverweildauer haben kann, es jedoch auch möglich ist, dass beispielsweise bei einem doppelten Transporthub gegenüber dem Standardtransporthub die Verweildauer an einer Position 8_{a-f} bis zum Ende des zweiten, darauffolgenden Taktes sein kann, wie nachfolgend beschrieben. Diese erhöhte Transportgeschwindigkeit in der Transportzeit, die zu dem erhöhten Transporthub führt, kann als Synonym für einen gegenüber einem Standardhub während einer Standardzeit mit einer Standardverweilzeit veränderten Index verstanden werden. Auch kann ein veränderter Index dahingehend verstanden werden, dass für die Bewegung von einer Position 8_{a-f} zur nächsten Position 8_{a-f} samt der dort verbrachten Verweildauer mehr als ein Standardtakt, insbesondere 2 oder mehr Standardtakte verwendet werden, wie nachfolgend noch beschrieben werden wird.

Fig. 1a zeigt die Transportschiene 2 der Abfülleinrichtung zu einem Zeitpunkt T₀.

Ausgehend von diesem Zeitpunkt T₀, zu Beginn eines Taktes werden die Transportschlitten 4a-f zunächst um den Transporthub 16 von einer Position 8_{a-f} zur nächsten Position 8_{a-f} bewegt. Das bedeutet, dass der Transportschlitten 4a um den Transporthub 16a, der Transportschlitten 4 um den Transporthub 16b und so weiter transportiert werden. Nach der Vorschubzeit, welche für jeden Vorschub zwischen zwei benachbarten Positionen 8_{a-f} individuell einstellbar ist, erfolgt eine Verweildauer die ebenfalls einstellbar ist, jedoch so sein sollte, dass die Summe aus Transportzeit und Verweilzeit genau der Zeit eines Taktes entspricht.

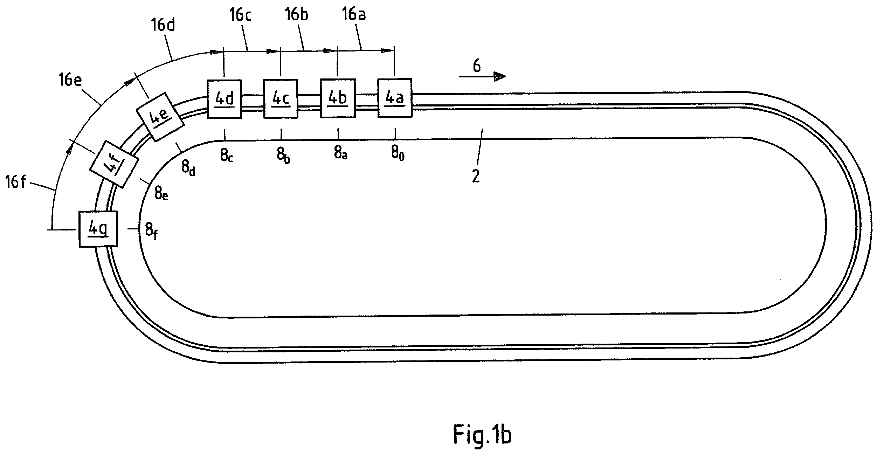

Während der Verweildauer verweilen die Transportschlitten 4a-f an den Positionen 8_{a-f} und die Arbeitsstationen können die an den Transportschlitten 4a-f angeordneten Verpackungen weiterverarbeiten. Die Summe aus Transportzeit und Verweilzeit entspricht jeweils vorzugsweise einem Takt. Nach Ablauf eines Taktes erfolgt eine Weiterbewegung entsprechend der Darstellung in Fig. 1b.

In der Fig. 1b ist zu erkennen, dass der Transportschlitten 4f an die Position 8ₑ bewegt wurde, woraufhin ein neuer Transportschlitten 4g aus einem Pufferbereich der Transportschiene 2 zugeführt wird und an der Position 8_{f} verweilt. Dort kann ein aufgefalteter Packungsmantel auf den Transportschlitten 4g bzw. einen daran angeordneten Träger aufgebracht werden. Auch ist es möglich, dass mehrere aufgefaltete Verpackungen parallel zueinander auf einen Träger, der an dem Transportschlitten 4a-g angeordnet ist, aufgesetzt werden.

Ferner ist in der Fig. 1b zu erkennen, dass der Transportschlitten 4a von der Position 8ₐ zu der in Bewegungsrichtung 6 benachbarten Position 8₀ bewegt wurde.

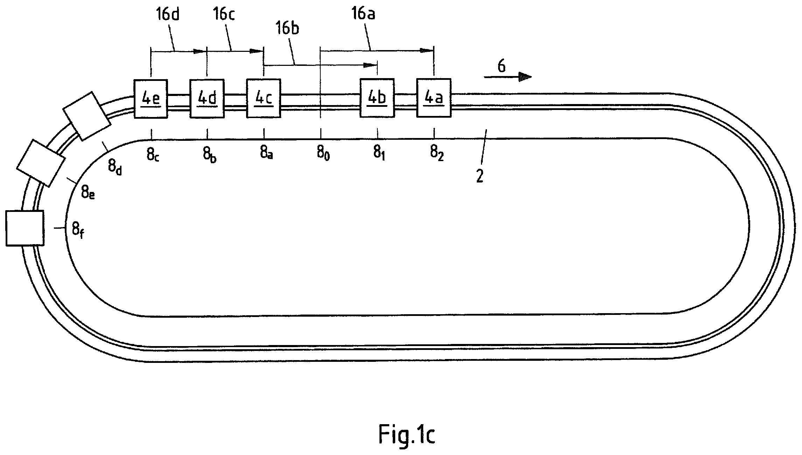

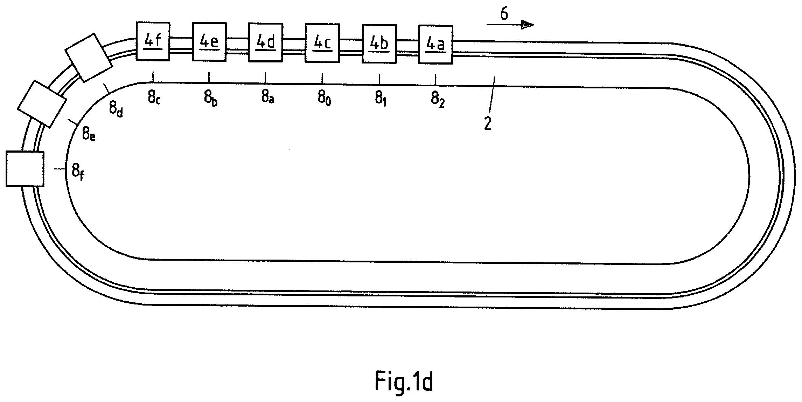

Fig. 1c zeigt die Bewegung der Transportschlitten 4a, b mit einem doppelten Index. Ausgehend von der Fig. 1b, wurde der Transportschlitten 4a zu Beginn des Taktes um den Transporthub 16a bewegt, wobei der Transporthub 16a derart ist, dass der Transportschlitten 4a von der Position 8₀ zur Position 8₂ bewegt wurde. Der Transportschlitten 4b wurde ausgehend von der Fig. 1b um den Transporthub 16b ausgehend von der Position 8ₐ zu der Position 8₁ bewegt. Zu erkennen ist, dass die Transporthübe 16a, 16b vergrößert gegenüber den Transporthüben 16c-f sind. Durch die vergrößerten Transporthübe 16a, 16b ist am Ende der Transportzeit die Position 8₀ unbesetzt. Dadurch ist es nunmehr im nächsten Takt möglich, wie in der Fig. 1d dargestellt, die Transportschlitten 4c-f wieder entlang der Bewegungsrichtung 16 mit einem Standard Transporthub auf die Positionen 8_{0-c} zu bewegen. Währenddessen können die Transportschlitten 4a, b auf den Positionen 8₁, 8₂ verweilen. Diese verlängerte Verweildauer kann dazu genutzt werden, den Füllvorgang an den an den Transportschlitten 4a, b angeordneten Verpackungen fortzusetzen. Sowohl an der Position 8₁, als auch an der Position 8₂ kann eine Füllvorrichtung vorgesehen sein.

Durch die längere Verweildauer ist es möglich, mit geringeren Strömungsgeschwindigkeiten das Produkt einzufüllen, was die Produktionsqualität erhöht.

Wie an den Figuren 1c-d zu erkennen ist, ist die Zeit für die Transportschlitten 4a,b vom Beginn der Bewegung von der Position 8_{a,b}, zu den Positionen 8_{1,2} bis zum Ende des Arbeitsschrittes, hier des Abfüllvorgangs, länger, vorzugsweise doppelt so lang, wie dies bei der Bewegung in einem Takt beispielsweise von der Position 8_{c} zur Position 8_{b} bzw. von der Position 8_{b} zu der Position 8ₐ ist. Dies kann als längerer bzw. doppelter Index verstanden werden.

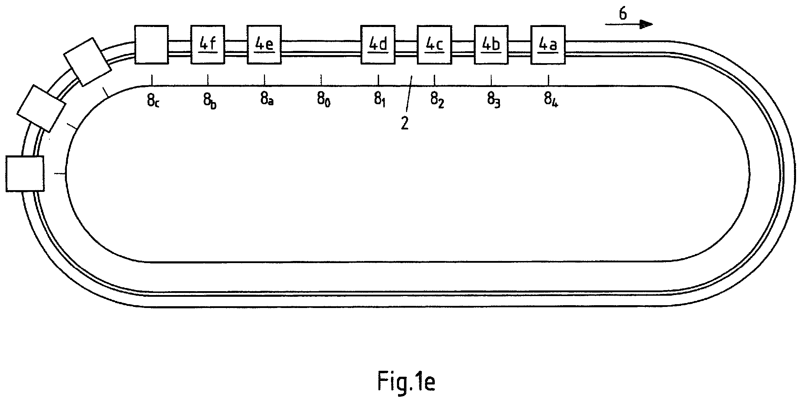

Zum Ende des zweiten Taktes nach dem Beginn der Bewegung der Transportschlitten 4a, b von den Positionen 8_{0,a} zu den Positionen 8_{1,2} ist der Arbeitsschritt an den Arbeitsstationen an den Positionen 8_{1,2} abgeschlossen. Anschließend werden die Transportschlitten 4a-f entsprechend der Fig. 1e weiterbewegt. In diesem Fall werden die Transportschlitten 4a, b erneut mit einer erhöhten Geschwindigkeit und einem größeren Transporthub von der Position 8₂ zu der Position 8₄ respektive von der Position 8₁ zu der Position 8₃ bewegt. Gleichzeitig werden die Transportschlitten 4c von der Position 8₀ und 4d von der Position 8ₐ auf die Position 8₂ respektive 8₁ bewegt. Diese beiden vergrößerten Transporthübe in der Transportzeit sind bedingt durch eine erhöhte Geschwindigkeit. Auch dies kann als erhöhter Index verstanden werden. Währenddessen wurden die Transportschlitten 4e von der Position 8_{b} zu der Position 8a und 4f von der Position 8_{c} zu der Position 8_{b} bewegt.

Anschließend kann im nächsten Takt eine im normalen Takt verlaufende Bewegung der Transportschlitten 4a, b um jeweils eine Position erfolgen, wobei gleichzeitig die Transportschlitten 4c und d in diesem Takt an den Positionen 8_{1, 2} verweilen und der Transportschlitten 4e an die Position 8₀ und der Transportschlitten 4f an die Position 8ₐ bewegt wird. Während dieses gesamten Taktes kann die Arbeitsstation an der Position 8₁, 8₂ die dort angeordneten Verpackungen bearbeiten und hat somit eine erhöhte Bearbeitungszeit.

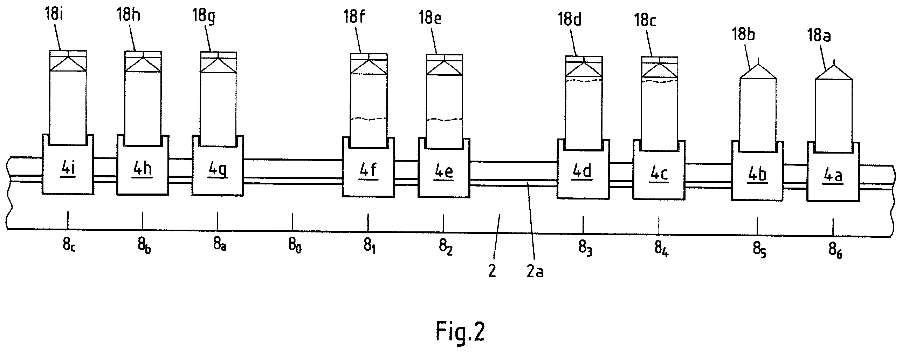

Fig. 2 zeigt eine Transportschiene 2 mit Transportschlitten 4a-i. Zu erkennen ist, dass die Transportschiene 2 eine Führung 2a aufweist, welche beispielsweise als durchgehende Nut gestaltet ist. Im Gegensatz zu den Fig. 1a-d sind im Produktivbereich entlang der Transportschiene 2 zwei Fülleinrichtungen nebeneinander in jeweils doppelter Ausführung an den Positionen 8_{1, 2} sowie 8_{3, 4} vorhanden. Zu Beginn eines ersten Taktes werden die Transportschlitten 4e, f von den Positionen 8_{a,0} zu den Positionen 8_{1,2} bewegt. Gleichzeitig wird zu Beginn des Taktes der Transportschlitten 4c von der Position 8₂ zu der Position 8₄ und der Transportschlitten 4d von der Position 8₁ zu der Position 8₃ bewegt. Anschließend erfolgt vorzugsweise noch im selben Takt ein Füllvorgang an den noch nach oben offenen Packungsmäntel 18c-f. An den Positionen 8_{1, 2} erfolgt ein Vorfüllen und an den Positionen 8_{3, 4} erfolgt ein Abfüllen. Durch den doppelten Füllvorgang kann die Produktionsqualität erhöht werden. Auch kann die Genauigkeit der Füllmenge erhöht werden. Im nächsten Takt werden lediglich die Transportschlitten 4g-i sowie die Transportschlitten 4a-b um jeweils eine Position bewegt, wohingegen die Transportschlitten 4c-f an den bisherigen Positionen verbleiben und der Füllvorgang weiter durchgeführt werden kann. Dieser Füllvorgang dauert bis zum Ende des zweiten Taktes und erst zu Beginn des dritten Taktes erfolgt ein Vorschub auch der Transportschlitten 4c-f, wobei die Transportschlitten 4c-d von den Positionen 8_{4,3} respektive auf die Positionen 8_{6,5} bewegt werden und die Transportschlitten 4e, f von den Positionen 8_{2,1} respektive auf die Positionen 8_{4,3} bewegt werden. Dieser doppelte Hub erfolgt auch für die Transportschlitten 4g, h, die von den Positionen 8_{a, 0} respektive auf die Positionen 8_{1, 2} bewegt werden und dort der Füllvorgang beginnen kann.

An der Position 8₀ sowie an der Position 8₅, d.h. die Position, die durch den vergrößerten Index nur von jeder zweiten Packung 18a-i angefahren wird, ist keine Arbeitsstation vorgesehen, so dass dort keine Verarbeitung stattfindet. D.h., dass jeweils eine Leerposition zwischen zwei Verarbeitungspositionen im Bereich des veränderten Index vorhanden sein kann. Auch die Position 8₅ kann ohne eine Weiterverarbeitung der Verpackung 18b sein und das Schließen des Giebels der Verpackung kann beispielsweise an der Position 8₆ an der Packung 18a erfolgen.

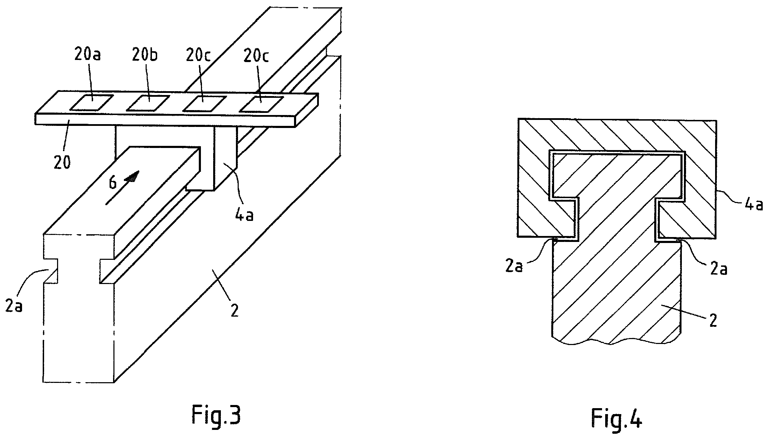

Wie bereits in der Fig. 2 erläutert, hat die Transportschiene 2 eine durchgehende Nut 2a, was in der Fig. 3 schematisch dargestellt ist. In dieser Nut kann ein C-förmiges Profil eines Transportschlittens 4a eingesetzt sein. Auf dem Transportschlitten 4a kann ein Träger 20 angeordnet sein. Der Träger 20 kann dabei Aufnahmen 20a-d zur Aufnahme von Packungsmänteln 18a-i aufweisen. Die Aufnahmen 20a-d können vorzugsweise entsprechend dem Bodenquerschnitt der Packung 18a-i sein, jedoch auch z.B. die Packungen klemmend umgreifen oder dergleichen.

Durch die Führung 2a wird der Schlitten 4a an der Transportschiene 2 geführt und ist dort formschlüssig gegenüber einem Ablösen quer zur Bewegungsrichtung 6 gesichert.

Diese Sicherung ist in der Fig. 4 nochmals dargestellt. Zu erkennen ist, dass der Transportschlitten 4a eine C-förmig gestaltete Aufnahme aufweist, die in der Nut 2a der Transportschiene 2 geführt ist. Die in der Fig. 4 gezeigte Führung des Transportschlittens 4a an der Transportschiene 2 ist insbesondere dann vorteilhaft, wenn die Transportschiene 2 eine Bewegungsrichtung des Transportschlittens 4a vorgibt, die nicht lediglich in der Horizontalen ist, sondern gegebenenfalls vertikal ist. Insbesondere auch, wenn die Transportschlitten 4a in Richtung Boden weisend an der Transportschiene 2 geführt sind. Dann können die Transportschlitten 4a nicht von der Transportschiene 2 abfallen.

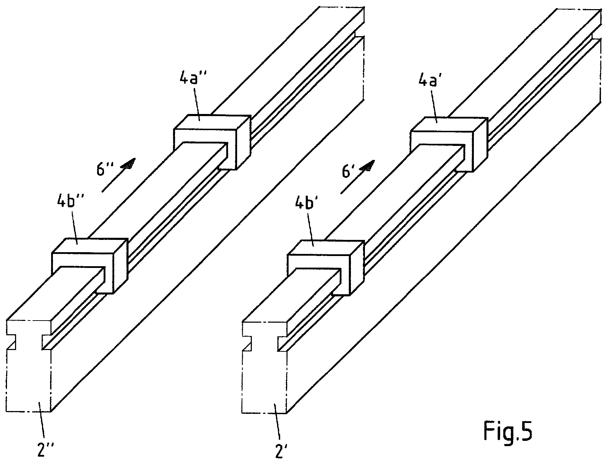

Fig. 5 zeigt ein weiteres Ausführungsbeispiel, bei der zwei Transportschienen 2', 2" parallel nebeneinander angeordnet sind. Auf jeder der Transportschienen 2', 2'können jeweils Transportschlitten 4a', 4b' bzw. 4a", 4b" angeordnet sein. Jeweils zwei Transportschlitten 4a', 4a" bzw. 4b', 4b" sind synchronisiert zueinander, so dass deren Bewegung entlang der Bewegungsrichtung 6', 6" entlang der Führungsschienen 2', 2" gleichlaufend ist. Dabei wird durch eine geeignete Ansteuerung sichergestellt, dass insbesondere das Beschleunigungsprofil als auch die Positionierung an einer der Position 8a-f zwischen jeweils zwei der Transportschlitten 4a', 4a"; 4b', 4b" nahezu identisch ist. Dabei ist bevorzugt, wenn jeweils ein Transportschlitten 4a', 4b' auf einer Transportschiene 2' als Master agiert und der jeweils andere Transportschlitten 4a", 4b" auf der jeweils anderen Transportschiene 2" als Slave dem Master unmittelbar folgt.

Zwischen den Transportschlitten 4a, 4a" und 4b und 4b" kann jeweils ein Träger 20 angeordnet sein, was der Übersichtlichkeit halber jedoch nicht dargestellt ist.

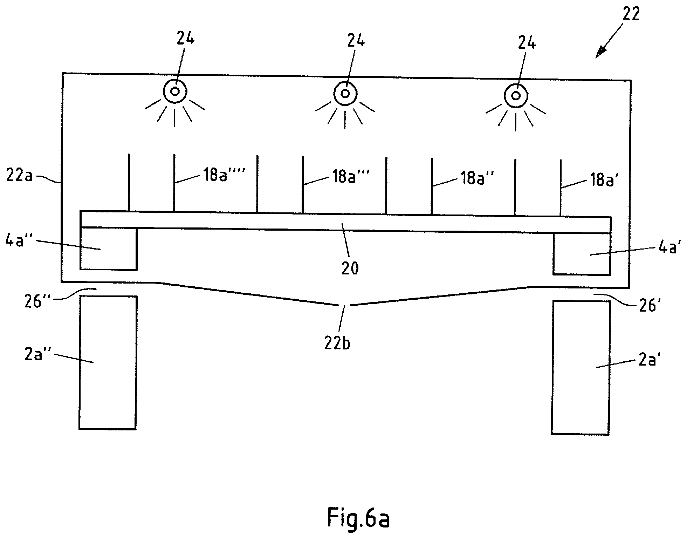

Eine solche Darstellung, mit einem zwischen zwei Transportschlitten 4a', 4a" angeordneten Träger 20 ist in der Fig. 6a dargestellt. Fig. 6a zeigtschematisch einen Querschnitt durch eine Sterilisationseinheit. Zu erkennen ist, dass die Sterilisationseinheit 22 ein Gehäuse 22a aufweist. Das Gehäuse 22a umschließt umlaufend die Transportschlitten 4a', 4a" sowie den Träger 20 und die daran angeordneten Packungsmäntel 18a'-a"". Innerhalb des Gehäuses 22a können beispielsweise Sterilisations- oder Dampfapplikatoren 24 angeordnet sein, die beispielsweise Sterilisationsmittel und/oder Dampf auf die Packungsmäntel 18a', 18a"" aufsprühen oder sonst wie aufbringen.

Der Boden des Gehäuses 22 ist vorzugsweise sich verjüngend gebildet, mit vorzugsweise einer Ablaufsicke 22b, in der sich das nicht verbrauchte Sterilisationsmittel bzw. das Wasser des Wasserdampfes sammeln kann und dort abfließen oder abgesaugt werden kann.

Ferner ist zu erkennen, dass das Gehäuse 22a in einem Spalt 26', 26" zwischen jeweils einem Transportschlitten 4a', 4a" und einer Transportschiene 2a', 2a" geführt ist. Dies führt dazu, dass das Volumen innerhalb des Gehäuses 22a möglichst klein ist, so dass der Verbrauch an Sterilisationsmittel reduziert ist.

Dadurch, dass die Transportschlitten 4a', 4a" vorzugsweise in der Art eines Linearmotors elektromagnetisch durch die Transportschiene 2a', 2a" geführt ist, kann ein Luftspalt vorgesehen sein, da die magnetischen Kräfte auch über den Luftspalt hinweg wirken können. Hierdurch kann das Gehäuse 22a umlaufend geschlossen um den Träger 20 und die darauf angeordneten Verpackungen 18 angeordnet sein.

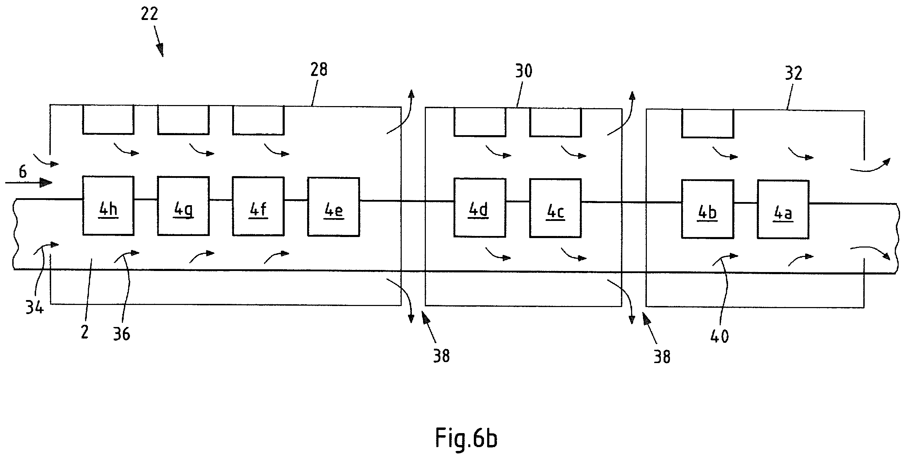

Während des Transports der Transportschlitten 4 durch die Sterilisationseinheit 20 bewegen sich die Transportschlitten 4 in Bewegungsrichtung 6 wie in der Fig. 6b dargestellt ist. Fig. 6b zeigt eine schematische Ansicht einer Sterilisationseinheit 22 mit einem Sterilisator 28, einer Fülleinheit 30 und einer Schließeinheit 32.

Die Einheiten 28-32 können Teil des Produktivbereichs 10 sein. Die Transportschlitten 4a-h samt Verpackungen 18 werden entlang der Transportschiene 2 durch die Bereiche 28-32 bewegt. Durch die Bewegung in Bewegungsrichtung 6 erfolgt ein Mitreißen von Umgebungsluft, wie durch die Pfeile 34 dargestellt ist.

Aufgebrachtes Sterilisationsmittel wird in dem Sterilisator 28 in Richtung der Pfeile 36 durch den Luftstrom mitgerissen. Zwischen dem Sterilisator 28 und der Fülleinheit 30 können Entlüftungsschlitze 38 vorgesehen sein, um gegebenenfalls überschüssiges Sterilisationsmittel abzuführen.

In der Fülleinheit kann ein Abfüllen samt Applizieren von Inertgas (z.B. Stickstoff) und/oder Dampf erfolgen. Zusätzlich wird das Produkt in die Verpackung 18 eingebracht. Zwischen der Fülleinheit 30 und der Schließeinheit 32 kann erneut ein Lüftungsschlitz 38 vorgesehen sein, so dass auch hier überschüssiger Dampf bzw. überschüssiges Sterilisationsmittel oder überschüssiger Stickstoff abgeführt werden kann.

In der Schließeinheit 32, kann beispielsweise ein Versiegeln unter Dampf erfolgen. Dieser applizierte Dampf wird ebenfalls in Richtung der Pfeile 40 durch den Luftstrom mitgeführt und am Ende der Sterilisationseinheit 22 ausgestoßen.

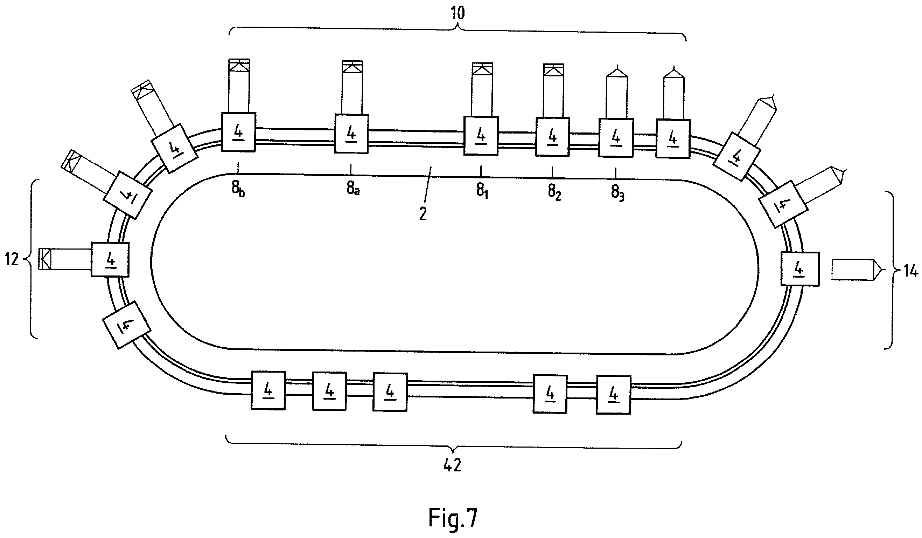

Fig. 7 zeigt die Transportschiene 2 als geschlossenen Ring. Die Transportschiene 2 verfügt über einen Einschleusebereich 12, einen Produktivbereich 10, sowie einen Ausschleusebereich 14 als auch einen Pufferbereich 42. Die Transportschlitten werden in dem Einschleusebereich 12, dem Produktivbereich 10 und dem Ausschleusebereich 14 wie beschrieben getaktet bewegt. Im Pufferbereich 42 kann ein Sterilisieren oder Reinigen der Transportschlitten 4 erfolgen. Der Produktivbereich 10 umfasst zumindest einen Teilbereich der Transportschiene 2, in dem die Transportschlitten 4 in der Horizontalen bewegt werden. Entlang des Einschleusebereichs 12 als auch des Ausschleusebereichs 14 kann die Transportschiene so geformt sein, dass die Transportschlitten 4 winklig, insbeondere in einer Vertikalen zumindest in Teilen bewegt werden. Vorzugsweise verläuft die Transportschiene 2 im Pufferbereich 42 parallel zu der Transportschiene 2 im Produktivbereich und die Transportschlitten 4 sind nach unten weisend an der Transportschiene 2 angeordnet. In dem Pufferbereich können die Transportschlitten 4 ungetaktet bewegt werden. Es sollte nur sichergestellt werden, dass zu Beginn eines jeden Taktes jeweils ein Transportschlitten 4 für den Transport in den Einschleusebereich 12 zur Verfügung steht.

Im Einschleusebereich 12 wird jeweils getaktet zum Beispiel zunächst eine aufgefaltete Verpackung 18 auf ein Transportschlitten 4 aufgesetzt und anschließend im nächsten Takt wird der aufgefaltete Verpackungsmantel 18 gesäubert. Im nächsten Takt wird der Transportschlitten 4 in den Produktivbereich 10 bewegt. Dort werden die Transportschlitten 4 entsprechend der Beschreibung der Fig. 1a-d mit einfachen und beispielsweise doppelten Index bewegt und die Transportschlitten 4 sowie die Verpackung 18 werden dort sterilisiert, befüllt und versiegelt. Anschließend werden die befüllten, versiegelten Verpackungen 18 in den Ausschleusebereich 14 bewegt und dort ausgestoßen.

Im Pufferbereich 42 gelangen die leeren Transportschlitten 4 und können dort gereinigt und ggf. für einen erneuten Umlauf zwischengespeichert werden.

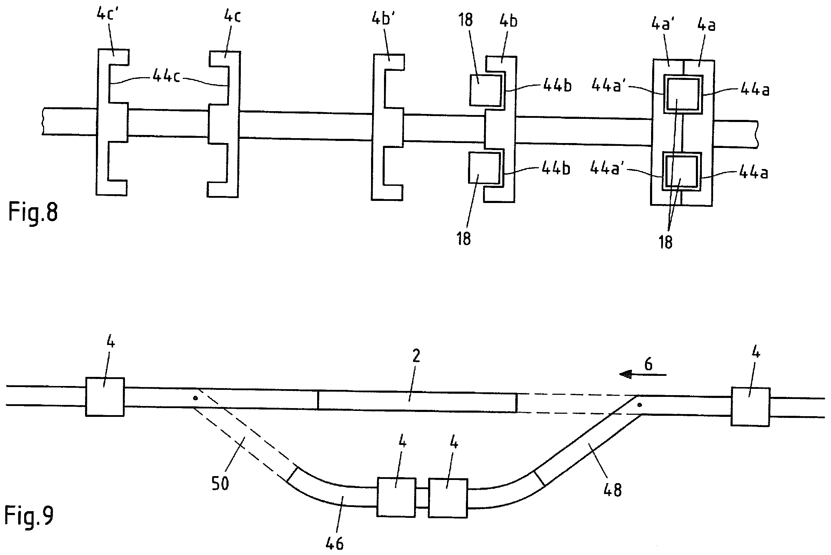

Ein Träger 20 kann die Verpackungen beispielsweise durch Aufnahmen aufnehmen. Auch ist es möglich, dass zueinander korrespondierende Träger auf jeweils zwei hintereinander angeordneten Transportschlitten 4 angeordnet sind, wie dies in der Fig. 8 dargestellt ist. Fig. 8 zeigt eine Draufsicht auf eine Transportschiene 2 mit mehreren Transportschlitten 4a-c, 4a'-c' bzw. entsprechend geformten Trägern. Die Darstellung der Fig. 8 entspricht drei Takten während der Verarbeitung der Verpackungen. Zunächst werden die Transportschlitten 4c, 4c' gespreizt voneinander an den Einschleusebereich 12 herangeführt. Hierbei ist der Abstand zwischen einer Vorderkante 44' und einer Hinterkante 44c zweier benachbarter Transportschlitten 4c, 4c' so groß, dass eine Verpackung 18 eingeführt werden kann. Im nächsten Takt werden die Verpackungen 18 zwischen die Transportschlitten 4b, 4b" eingesetzt und beispielsweise so angeordnet, dass sie an einem Rücksprung an der hinteren Kante 44b des Schlittens 4b angeordnet werden. Im nächsten Takt erfolgt ein Einklemmen der Verpackungen 18 zwischen den Transportschlitten 4a. 4a' derart, dass der Abstand zwischen den Transportschlitten 4a, 4a' so ist, dass die Verpackung zwischen der jeweiligen Hinterkante 44a und der Vorderkante 44a' eingeklemmt wird. Dieses Einklemmen ist durch die individuelle Ansteuerung der Position jedes einzelnen der Schlitten 4a, 4a' möglich. Der Vorgang gemäß Fig. 8 kann auch in einem einzigen Takt während der Einschleusung erfolgen.

Im Pufferbereich ist eine Einschleusung von Transportschlitten 4 von der Transportschiene 2 auf eine Reserveschiene 46 möglich. Hierzu sind an der Transportschiene 2 eine Auskopplung 48 sowie eine Einkopplung 50 vorgesehen. Die Auskopplung 48 der Transportschiene 2 ist schwenkbar quer zur Bewegungsrichtung 6, so dass diese an die Reserveschiene 46 angekoppelt werden kann. Transportschlitten 4, die in Bewegungsrichtung 6 bewegt werden, werden über die Auskopplung 48 auf die Reserveschiene 46 bewegt. Dort können sie beispielsweise von der Reserveschiene 46 entfernt werden, repariert werden und erneut aufgesetzt werden, ohne den laufenden Betrieb entlang der Transportschiene 2 zu beeinflussen. Über die Einschleusung 50, die ebenfalls quer zur Bewegungsrichtung 6 schwenkbar ist, können die Transportschlitten 4 von der Reserveschiene 46 erneut auf die Transportschiene 2 zurückbewegt werden.

Mit Hilfe der gegenständlichen Verpackungseinrichtung ist es möglich, die Arbeitszeit an verschiedenen Arbeitsstationen individuell einzustellen.

## Patentansprüche

1. Verpackungsmaschine, insbesondere Füllmaschine, mit
- zumindest einer Transportschiene (2), und
- zumindest zwei entlang der Transportschiene (2) beweglichen, an der Transportschiene (2) angeordneten Transportschlitten (4), wobei
- die Transportschlitten (4) zum Transport zumindest einer Verpackung eingerichtet sind und wenigstens abschnittsweise getaktet entlang eines Produktivbereichs der Transportschiene (2) bewegt werden, wobei ein Takt durch eine Vorschubzeit zwischen zwei Arbeitsstationen und eine Verweilzeit an einer Arbeitsstation bestimmt ist, und
- die Transportschiene (2) und die Transportschlitten (4) derart elektromotorisch miteinander in Wirkverbindung sind, dass die Transportschlitten (4) entlang eines Produktivbereichs mit zwei voneinander verschiedenen Indizes bewegt sind,
wobei ein Index durch einen Quotient aus einer Verweilzeit an einer der Arbeitsstationen und einer Vorschubzeit zwischen zwei Arbeitsstationen bestimmt ist,
**dadurch gekennzeichnet,**
- **dass** an dem Transportschlitten (4) über eine Magnetverbindung oder eine Clickverbindung ein Träger angeordnet ist, der zumindest einen Boden einer Verpackung tragend aufnimmt, wobei der Träger austauschbar an dem Transportschlitten (4) angeordnet ist.

2. Verpackungsmaschine nach Anspruch 1,
**dadurch gekennzeichnet,**
- **dass** die Transportschlitten (4) im Produktivbereich im Bereich einer Fülleinrichtung, insbesondere einer Abfülleinrichtung mit einem verschiedenen, insbesondere größeren Index bewegt sind als außerhalb der Fülleinrichtung.

3. Verpackungsmaschine nach einem der vorangehenden Ansprüche,
**dadurch gekennzeichnet,**
- **dass** jeweils zumindest N - Transportschlitten (4) mit einem N-fachen Index in der Fülleinrichtung bewegt sind, wobei N größer 1 ist, insbesondere dass die Transportschlitten (4) mit einem Index größer 1 bewegt sind.

4. Verpackungsmaschine nach einem der vorangehenden Ansprüche,
**dadurch gekennzeichnet,**
- **dass** zumindest zwei Transportschlitten (4) mit einer höheren, vorzugsweise zumindest doppelten Vorschubgeschwindigkeit in der Fülleinrichtung bewegt sind, und/oder
- **dass** zumindest zwei Transportschlitten (4) mit einem höheren, vorzugsweise zumindest doppelten Vorschubweg in der Vorschubzeit bewegt sind.

5. Verpackungsmaschine nach einem der vorangehenden Ansprüche,
**dadurch gekennzeichnet,**
- **dass** die Haltezeit von zumindest zwei Transportschlitten (4) in der Fülleinrichtung größer oder kleiner als die Haltezeit der Packungen außerhalb der Fülleinrichtung ist, insbesondere zumindest das doppelte der Haltezeit der Packungen außerhalb der Fülleinrichtung ist.

6. Verpackungsmaschine nach einem der vorangehenden Ansprüche,
**dadurch gekennzeichnet,**
- **dass** die Transportschlitten (4) im Produktivbereich zwischen jeweils zwei Arbeitsstationen mit verschiedenen Beschleunigungsprofilen bewegt sind.

7. Verpackungsmaschine nach einem der vorangehenden Ansprüche,
**dadurch gekennzeichnet,**
- **dass** die Transportschiene (2) einen Einschleusebereich, einen Produktivbereich, einen Ausschleusebereich und einen Pufferbereich aufweist, wobei die Transportrichtung der Transportschlitten (4) in zumindest einem ersten Bereich winklig zu zumindest einem zweiten Bereich verläuft, insbesondere in einem Winkel zwischen 30° und 60°.

8. Verpackungsmaschine nach einem der vorangehenden Ansprüche,
**dadurch gekennzeichnet,**
- **dass** die Transportschiene (2) zumindest einen Schenkel entlang einer Transportvorrichtung aufweist, insbesondere dass die Transportvorrichtung einen geschlossenen Ring mit zumindest einem Schenkel in der Form der Transportschiene (2) bildet.

9. Verpackungsmaschine nach einem der vorangehenden Ansprüche,
**dadurch gekennzeichnet,**
- **dass** die Transportschiene (2) zumindest einen teilweise entlang des Produktivbereichs der zumindest teilweise in der Fülleinrichtung der Verpackungsmaschine geführten Schenkel bildet und/oder dass die Transportschiene (2) zumindest teilweise entlang eines Pufferbereichs einen Schenkel bildet, insbesondere dass die Schenkel einander gegenüber liegen.

10. Verpackungsmaschine nach einem der vorangehenden Ansprüche,
**dadurch gekennzeichnet,**
- **dass** der Träger zur Aufnahme von zumindest zwei Verpackungen angeordnet ist.

11. Verpackungsmaschine nach einem der vorangehenden Ansprüche,
**dadurch gekennzeichnet,**
- **dass** zwei parallel zueinander verlaufende Transportschienen (2)n mit jeweils daran angeordneten Transportschlitten (4) vorgesehen sind, wobei jeweils zwei Transportschlitten (4) synchronisiert auf den beiden Transportschienen (2) geführt sind, insbesondere-dass ein Transportschlitten (4) an einer ersten der Transportschiene (2)n als Master-Schlitten gesteuert ist und ein Transportschlitten (4) an einer zweiten der Transportschienen (2) als Slave-Schlitten abhängig von dem Master-Schlitten geführt ist.

12. Verpackungsmaschine nach einem der vorangehenden Ansprüche,
**dadurch gekennzeichnet,**
- **dass** die Transportschiene (2) einen zumindest in Teilen vertikal verlaufenden Einschleusebereich aufweist und dass die Transportschlitten (4) im Einschleusebereich zur Aufnahme von leeren Packungsmänteln von einer Zuführeinheit, insbesondere von einem Dornrad gebildet sind, und/oder
- **dass** die Transportschiene (2) einen zumindest in Teilen winklig zur Horizontalen verlaufenden Ausschleusebereich aufweist und dass die Transportschlitten (4) im Ausschleusebereich zum Absetzten von gefüllten Verpackungen an eine Abführeinheit gebildet sind.

13. Verpackungsmaschine nach einem der vorangehenden Ansprüche,
**dadurch gekennzeichnet,**
- **dass** die Transportschiene (2) zumindest einen Auskopplungsbereich aufweist, wobei die Transportschiene (2) im Auskopplungsbereich verschwenkbar ist und/oder dass die Transportschiene (2) zumindest einen Einkopplungsbereich aufweist, wobei die Transportschiene (2) im Einkopplungsbereich verschwenkbar ist.

14. Verpackungsmaschine nach einem der vorangehenden Ansprüche,
**dadurch gekennzeichnet,**
- **dass** die Transportschiene (2) im Füllbereich in einer Sterilisationseinheit geführt wird, wobei die Sterilisationseinheit die Transportschlitten (4) umlaufend umschließt, insbesondere
- **dass** die Sterilisationseinheit die Transportschlitten (4) radial umlaufend umschließt, insbesondere dass die Sterilisationseinheit ein Gehäuse um die Transportschlitten (4) bildet, insbesondere
- **dass** die Sterilisationseinheit zunächst eine Zuführung von Sterilisationsmittel und anschließend eine Zuführung von Dampf aufweist oder dass die Sterilisationseinheit zunächst eine Zuführung von Dampf und anschließend eine Zuführung von Sterilisationsmittel aufweist, insbesondere
- **dass** zwischen der Zuführung von Sterilisationsmittel und Zuführung von Dampf die Sterilisationseinheit zumindest eine Abluftöffnung aufweist.

## Claims

1. Packaging machine, in particular filling device, with
- at least one transport rail (2), and
- at least two transport slides (4) movable along the transport rail (2) and arranged on the transport rail (2), wherein
- the transport slides (4) are arranged for transporting at least one package and are moved at least in sections in a cycled manner along a productive area of the transport rail (2), wherein a cycle is formed by a feed time between two workstations and a dwell time at one workstation and
- the transport rail (2) and the transport slides (4) are electromotively coupled to one another in such a way that the transport slides (4) are moved along a productive area with two indices which are different from one another, wherein
- an index is formed by the ratio between a dwell time at a workstation and a feed time between two workstations,
**characterized in that**
- a carrier is mounted by a magnetic connection or a snap-in connection at the transport slide (4), which carries at least a bottom of each package, wherein the carrier is exchangeably mounted to the transport slide (4).

2. Packing machine according to claim 1,
**characterized in that**
- the transport slides (4) are moved in the productive area in the region of a filling device, in particular a bottling device, with a different, in particular larger index than outside the filling device.

3. Packaging machine according to one of the preceding claims,
**characterized in that**
- at least N transport slides (4) with an N-fold index are respectively moved in the filling device, where N is greater than 1, in particular **in that** the transport slides (4) are moved with an index greater than 1.

4. Packaging machine according to one of the preceding claims,
**characterized in that**
- at least two transport slides (4) are moved in the filling device at a higher, preferably at least double, feed speed, and/or
- at least two transport slides (4) are moved with a higher, preferably at least double, feed stroke within the feed time.

5. Packaging machine according to one of the preceding claims,
**characterized in that**
- the hold time of at least two transport slides (4) in the filling device is greater than or less than the hold time of the packages outside the filling device, in particular at least twice the hold time of the packages outside the filling device.

6. Packaging machine according to one of the preceding claims,
**characterized in that**
- the transport slides (4) are moved in the productive area between two workstations each with different acceleration profiles.

7. Packaging machine according to one of the preceding claims,
**characterized in that**
- the transport rail (2) has an infeed area, a productive area, an outfeed area and a buffer area, the transport direction of the transport slides (4) extending in at least one first area at an angle to at least one second area, in particular at an angle between 30° and 60°.

8. Packaging machine according to one of the preceding claims,
**characterized in that**
- the transport rail (2) has at least one leg along a transport device, in particular **in that** the transport device forms a closed ring with at least one leg in the form of the transport rail (2).

9. Packaging machine according to one of the preceding claims,
**characterized in that**
- the transport rail (2) forms at least one leg partially along the productive area of the legs guided at least partially in the filling device of the packaging machine and/or **in that** the transport rail (2) forms a leg at least partially along a buffer area, in particular **in that** the legs lie opposite one another.

10. Packaging machine according to one of the preceding claims,
**characterized in that**
- the carrier is arranged for receiving at least two packages.

11. Packaging machine according to one of the preceding claims,
**characterized in that**
- two transport rails (2) running parallel to one another are provided with respective transport slides (4) arranged thereon, wherein respective two transport slides (4) being guided synchronously on the two transport rails in particular that
- a transport slide (4) is controlled on a first of the transport rails (2) as a master slide and a transport slide (4) is guided on a second of the transport rails (2) as a slave slide as a function of the master slide.

12. Packaging machine according to one of the preceding claims,
**characterized in that**
- the transport rail (2) has an infeed area extending at least in parts vertically, and **in that**, in the infeed area, the transport slides (4) are arranged for receiving empty pack sleeves from a feed unit, in particular by a mandrel wheel and/or
- the transport rail (2) has an outfeed area extending at least in parts at an angle to the horizontal, and **in that** the transport slides (4) are formed in the outfeed region for depositing filled packages on a discharge unit.

13. Packaging machine according to one of the preceding claims,
**characterized in that**
- the transport rail (2) has at least one coupling-out area, the transport rail (2) being swivable in the coupling-out area and/or **in that** the transport rail (2) has at least one coupling-in area, the transport rail (2) being swivable in the coupling-in area.

14. Packaging machine according to one of the preceding claims,
**characterized in that**
- the transport rail (2) is guided in the filling area in a sterilisation unit, the sterilisation unit enclosing the transport slides (4) in a circumferential manner in particular
- the sterilisation unit surrounds the transport slides (4) radially circumferentially, in particular **in that** the sterilisation unit forms a housing around the transport slides in particular
- the sterilisation unit initially has a supply of sterilising agent and then a supply of steam, or **in that** the sterilisation unit initially has a supply of steam and then a supply of sterilising agent in particular
- the sterilisation unit has at least one exhaust air opening between the supply of sterilising agent and the supply of steam.

## Revendications

1. Machine d'emballage, en particulier machine de remplissage, avec
- au moins un rail de transport (2), et
- au moins deux chariots de transport (4) mobiles le long du rail de transport (2) et disposés sur le rail de transport (2), où
- les chariots de transport (4) sont configurés pour transporter au moins un emballage et sont déplacés au moins par sections de manière cyclé le long d'une zone productive du rail de transport (2), où un cycle est déterminé par un temps d'avance entre deux stations de travail et un temps d'arrêt à une station de travail, et
- le rail de transport (2) et les chariots de transport (4) sont reliés entre eux de manière électromotrice de telle sorte que les chariots de transport (4) sont déplacés le long d'une zone productive avec deux indices qui sont différents l'un à l'autre, où
un indice est formé par un quotient d'un temps d'arrêt à l'un des postes de travail et d'un temps d'avance entre deux postes de travail,
**caractérisé en ce que**
- un support est disposé sur le chariot de transport (4) via une liaison magnétique ou une liaison à clic, qui supporte au moins un fond de chaque emballage, où le support est disposé de manière échangeable sur le chariot de transport (4).

2. Machine d'emballage selon la revendication 1,
**caractérisée en ce que**
- les chariots de transport (4) sont déplacés dans la zone productive dans la zone d'un dispositif de remplissage, en particulier d'un dispositif de remplissage avec un indice différent, en particulier plus grand, qu'à l'extérieur du dispositif de remplissage.

3. Machine d'emballage selon l'une des revendications précédentes,
**caractérisée en ce que**
- au moins N chariots de transport (4) avec un indice N-fois sont déplacés respectivement dans le dispositif de remplissage, où N est supérieur à 1, en particulier que les chariots de transport (4) sont déplacés avec un indice supérieur à 1.

4. Machine d'emballage selon l'une des revendications précédentes,
**caractérisée en ce que**
- au moins deux chariots de transport (4) sont déplacés dans le dispositif de remplissage à une vitesse d'avance supérieure, de préférence au moins double, et/ou
- au moins deux chariots de transport (4) sont déplacés dans le temps d'avance sur une distance d'avance supérieure, de préférence au moins double.

5. Machine d'emballage selon l'une des revendications précédentes,
**caractérisée en ce que**
- le temps d'arrêt d'au moins deux chariots de transport (4) dans le dispositif de remplissage est supérieur ou inférieur au temps d'arrêt des emballages à l'extérieur du dispositif de remplissage, en particulier au moins double du temps d'arrêt des emballages à l'extérieur du dispositif de remplissage.

6. Machine d'emballage selon l'une des revendications précédentes,
**caractérisée en ce que**
- les chariots de transport (4) se déplacent dans la zone productive entre deux stations de travail avec des profils d'accélération différents.

7. Machine d'emballage selon l'une des revendications précédentes,
**caractérisée en ce**
- **que** le rail de transport (2) comporte une zone d'entrée, une zone productive, une zone de sortie et une zone tampon, où la direction de transport des chariots de transport (4) s'étend dans au moins une première zone à angle droit par rapport à au moins une deuxième zone, en particulier selon un angle compris entre 30° et 60°.

8. Machine d'emballage selon l'une des revendications précédentes,
**caractérisée en ce que**
- le rail de transport (2) a au moins une branche le long d'un dispositif de transport, en particulier que le dispositif de transport forme un anneau fermé avec au moins une branche sous la forme du rail de transport (2).

9. Machine d'emballage selon l'une des revendications précédentes,
**caractérisée en ce que**
- que le rail de transport (2) forme au moins une branche partiellement le long de la zone productive du dispositif de remplissage de la machine d'emballage et/ou que le rail de transport (2) forme au moins partiellement une branche le long d'une zone tampon, en particulier que les branches sont opposées les unes aux autres.

10. Machine d'emballage selon l'une des revendications précédentes,
**caractérisée en ce que**
- le support est configuré pour recevoir au moins deux emballages.

11. Machine d'emballage selon l'une des revendications précédentes,
**caractérisée en ce que**
- deux rails de transport (2)n parallèles entre eux sont prévus, avec des chariots de transport (4) disposés sur chacun d'eux, où deux chariots de transport (4) respectives sont guidés de manière synchronisée sur les deux rails de transport (2), en particulier- qu'un chariot de transport (4) est commandé sur un premier des rails de transport (2)n en tant que chariot maître et un chariot de transport (4) sur un deuxième des rails de transport (2) en tant que chariot esclave en fonction du chariot maître.

12. Machine d'emballage selon l'une des revendications précédentes,
**caractérisée en ce**
- **que** le rail de transport (2) a une zone d'entrée s'étendant au moins en partie verticalement et que les chariots de transport (4) sont formés dans la zone d'entrée pour recevoir des enveloppes d'emballage vides provenant d'une unité d'alimentation, en particulier d'une roue à picots, et/ou
- **que** le rail de transport (2) a une zone de déchargement s'étendant au moins en partie à angle droit par rapport à l'horizontale et que les chariots de transport (4) sont formés dans la zone de déchargement pour déposer les emballages remplis sur une unité d'évacuation.

13. Machine d'emballage selon l'une des revendications précédentes,
**caractérisée en ce**
- **que** le rail de transport (2) a au moins une zone de découplage, où le rail de transport (2) est pivotable dans la zone de découplage et/ou que le rail de transport (2) a au moins une zone de couplage, où le rail de transport (2) est pivotable dans la zone de couplage.

14. Machine d'emballage selon l'une des revendications précédentes,
**caractérisée en ce que**
- le rail de transport (2) est guidé dans la zone de remplissage dans une unité de stérilisation, l'unité de stérilisation entourant les chariots de transport (4) de manière périphérique, en particulier
- que l'unité de stérilisation entoure les chariots de transport (4) de manière radialement périphérique, en particulier que l'unité de stérilisation forme un boîtier autour des chariots de transport (4), en particulier
- que l'unité de stérilisation a d'abord une alimentation en agent stérilisant, puis une alimentation en vapeur, ou que l'unité de stérilisation comporte d'abord une alimentation en vapeur, puis une alimentation en agent stérilisant, en particulier
- qu'entre l'alimentation en agent stérilisant et l'alimentation en vapeur, l'unité de stérilisation comporte au moins une ouverture d'évacuation d'air.
